(19) Europäisches Patentamt / European Patent Office / Office européen des brevets

(11) **EP 4 303 195 B1**

(12) **EUROPEAN PATENT SPECIFICATION**

(45) Date of publication and mention
of the grant of the patent:
**27.05.2026 Bulletin 2026/22**

(21) Application number: **22183918.6**

(22) Date of filing: **08.07.2022**

(51) International Patent Classification (IPC):
*C03B 23/04* (2006.01)    *A61J 1/06* (2006.01)
*B65D 13/02* (2006.01)    *C03B 23/045* (2006.01)
*C03B 23/047* (2006.01)    *C03B 23/057* (2006.01)
*C03B 23/09* (2006.01)    *B65B 3/00* (2006.01)
*B65D 1/10* (2006.01)

(52) Cooperative Patent Classification (CPC):
**C03B 23/04; A61J 1/065; B65D 1/10;
C03B 23/045; C03B 23/047; C03B 23/057;
C03B 23/09; C03B 23/092; C03B 23/099;
B65B 3/003**

(54) **GLASS CONTAINER WITH INCREASED BREAKAGE RESISTANCE**

GLASBEHÄLTER MIT ERHÖHTER BRUCHSICHERHEIT

RÉCIPIENT EN VERRE À RÉSISTANCE ACCRUE À LA RUPTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2024 Bulletin 2024/02**

(73) Proprietor: **SCHOTT Pharma AG & Co. KGaA
55122 Mainz (DE)**

(72) Inventors:
- **Langsdorf, Andreas
  55218 Ingelheim (DE)**
- **Maurer, Florian
  64347 Griesheim (DE)**
- **Dessoy, Lucia
  55411 Bingen (DE)**

- **Syndikus, Ina
  64295 Darmstadt (DE)**
- **Humbertjean, Alexander
  79189 Bad Krozingen (DE)**
- **Wetzel, Tobias
  79294 Sölden (DE)**
- **Mutlu, Fatih
  79395 Neuenburg (DE)**

(74) Representative: **Herzog IP Patentanwalts GmbH
Steinstraße 16-18
40212 Düsseldorf (DE)**

(56) References cited:
**EP-A1- 3 760 597**    **EP-A1- 3 842 024**
**US-A1- 2014 151 371**

- **DIN ISO 8362-1:2016-06 XP093356374**

**EP 4 303 195 B1**

## Description

The present invention relates to a glass container and to a plurality of glass containers, wherein the glass container or each glass container contained in the plurality of glass containers is characterized by an advantageous fracture ratio. The present invention also relates to a process for filling such a glass container in an automated filling line and to the use of a glass container or of a plurality of glass containers for increasing the overall equipment effectiveness in automated filling lines.

In the pharmaceutical industry, containers are used for the primary packaging of drugs. Among the traditionally most used materials is a glass container, as it ensures stability, visibility, endurance, rigidity, moisture resistance, ease of capping, and economy. The glass containers for medicinal purposes currently on the market include glass containers, made from glass tubing and blow-molded glass containers. The manufacturing methods for tubing-based glass containers and blow-molded glass containers are widely known. Tubing based glass containers are made from prefabricated glass tubing (mother tube) by shaping and separation. In a typical manufacturing process, a glass tube is loaded into the head of a rotary machine, and then, while rotating around its major axis, the tube is heated to its softening point by a flame and is pulled along its major axis for stretching and spreading the portion that has been subjected to heat softening to create and shape the bottom of the desired container. Tubular glass containers include vials, ampoules, bottles, cylindrical injector and syringe bodies, whose shape and size are standard. Blow-molded glass containers are made by shaping a glass melt directly by blowing or press- and-blow processes. The blow-molded glass containers include, for example, spray and infusion bottles, such as those described in DE 196 22 550 A1.

Pharmaceutical glass containers, such as vials obtained from prefabricated glass tubing by shaping and separation, are continuously exposed to certain stresses during processing and use, so that breakage events can occur during filling, transportation and packaging or later during the application of a pharmaceutical composition. Such breakage events not only lead to an undesired exclusion of glass containers from the production process, but also to a standstill of the automated filling lines.

In order to address this issue, highly chemically strengthened pharmaceutical vials have been proposed in the state of the art. Chemically strengthened pharmaceutical vials have an increased strength, so that a breakage occurs only at higher loads. However, breakage fundamentally cannot be ruled out, but only be reduced. Breakage even occurs with highly chemically strengthened vials. In this context, it was observed that especially with highly chemically strengthened vials the downtimes are particularly long when these vials break. In addition, for highly chemically strengthened pharmaceutical vials, due to the high tensile stress on the inside, if damage is caused by contact, breakage or failure can be greatly delayed and thus, occur long after processing, e.g. during the application of a pharmaceutical composition.

EP 3 842 024 A1 discloses a glass container comprising as container parts i) a glass tube with a first end, a further end, an outer diameter $d_1$, an inner diameter $d_2$ and a glass thickness s1, the glass tube being characterized by a longitudinal axis $L_{tube}$ that passes through the centre of the first and the further end; ii) a circular glass bottom, wherein the circular glass bottom closes the glass tube at the first end, wherein the circular glass bottom comprises an inner surface directed to the inside of the glass container, an outer surface directed to the outside of the glass container and a centre; and iii) a curved glass heel extending from an outer end of the circular glass bottom to the first end of the glass tube.

US 2014/151371 A1 discloses a glass container comprising a body having an inner surface, an outer surface and a wall thickness extending between the outer surface and the inner surface, wherein at least the inner surface of the body has a delamination factor less than or equal to 10; and a compressively stressed layer extending from the outer surface of the body into the wall thickness, the compressively stressed layer having a surface compressive stress greater than or equal to 150 MPa.

EP 3 760 597 A1 discloses a glass container comprising as container parts i) a glass tube with a first end and a further end, wherein the glass tube is characterized by a longitudinal axis $L_{tube}$ and comprises, in a direction from the top to the bottom, ia) a top region that is located at the first end of the glass tube, ib) a junction region that follows the top region, ic) a neck region that follows the junction region, id) a shoulder region that follows the neck region and ie) a body region that follows the shoulder region and that extends to the further end of the glass tube, and ii) a glass bottom that closes the glass tube at the further end.

In general, it is an object of the present invention to at least partly overcome a disadvantage arising from the prior art. It is a particular object of the present invention to provide glass containers, preferably pharmaceutical vials, that - when being processed in, for example, automated filling lines - lead to reduced downtimes of the machines used in these lines compared to glass containers known from the prior art. Moreover, the glass containers, preferably the pharmaceutical vials, should be characterized in that a reduced breakage or failure occurs in these vials even long after processing.

A contribution to at least partly solving at least one, preferably more than one, of the above objects is made by the independent claims. The dependent claims provide preferred embodiments which contribute to at least partly solving at least one of the objects.

A contribution to solving at least one of the objects according to the present invention is made by an embodiment 1 (= 1st embodiment) of a glass container as defined in claim 1.

EP 4 303 195 B1

A contribution to solving at least one of the objects according to the present invention is also made by an embodiment 1 (= 1st embodiment) of a plurality of glass containers as defined in claim 8.

A *"plurality of glass containers"* in the sense of the present invention comprises at least 100 glass containers. Preferably, the plurality of glass containers comprises at most 1000 glass container, more preferably at most 500 glass containers. Furthermore, the plurality of glass containers preferably has been collected arbitrarily and particularly has not been selected with regard to any property. For example, the plurality of glass containers may be the group of containers which are packed together in a typical transport tray or nest, preferably in a tub.

In a preferred embodiment of the glass container or the plurality of glass containers according to the present invention, the fracture ratio **C** is $160\,N \times cm^2$ or more, even more preferably $200\,N \times cm^2$ or more, even more preferably $300\,N \times cm^2$ or more and most preferably $350\,N \times cm^2$ or more, and/or $2000\,N \times cm^2$ or less, more preferably $1000\,N \times cm^2$ or less, even more preferably $800\,N \times cm^2$ or less, even more preferably $500\,N \times cm^2$ or less, even more preferably $450\,N \times cm^2$ or less and most preferably $400\,N \times cm^2$ or less. This embodiment is a 2nd embodiment of the glass container and the plurality of glass containers according to the present invention that preferably depends on the respective 1st embodiment.

In a further preferred embodiment of the glass container or the plurality of glass containers according to the present invention, the axial load **A** is 3000 N or more, even more preferably 3500 N or more and most preferably 4000 N or more and/or 5500 N or less, even more preferably 5000 N or less most preferably 4500 N or less. This embodiment is a 3rd embodiment of the glass container and the plurality of glass containers according to the present invention that preferably depends on the respective 1st or 2nd embodiment.

In a further preferred embodiment of the glass container or the plurality of glass containers according to the present invention, the number of fragments **B** is 200 or more, even more preferably 250 or more and most preferably 300 or more, and/or 700 or less, even more preferably 500 or less, even more preferably 400 or less and most preferably 200 or less. This embodiment is a 4th embodiment of the glass container and the plurality of glass containers according to the present invention that preferably depends on any one of the respective 1st to 3rd embodiment.

In a further preferred embodiment of the glass container or the plurality of glass containers according to the present invention, the normalized fragment area **X** is $0.35\,mm^2$ or more, preferably $0.4\,mm^2$ or more, more preferably $0.45\,mm^2$ or more and even more preferably $0.5\,mm^2$ and/or $0.95\,mm^2$ or less, preferably $0.9\,mm^2$ or less, more preferably $0.85\,mm^2$ or less and even more preferably $0.8\,mm^2$ or less. This embodiment is a 5th embodiment of the glass container and the plurality of glass containers according to the present invention that preferably depends on any one of the respective 1st to 4th embodiment.

In a further preferred embodiment of the glass container or the plurality of glass containers according to the present invention, the ratio of number of fragments to normalized area **B/X** is $0.5\,cm^{-2}$ or more, preferably $0.7\,cm^{-2}$ or more, more preferably $4\,cm^{-2}$ or more, even more preferably $7\,cm^{-2}$ or more, even more preferably $9\,cm^{-2}$ or more and most preferably $11\,cm^{-2}$ or more, and/or $200\,cm^{-2}$ or less, preferably $100\,cm^{-2}$ or less, more preferably $50\,cm^{-2}$ or less, even more preferably $30\,cm^{-2}$ or less, even more preferably $25\,cm^{-2}$ or less and most preferably $20\,cm^{-2}$ or less. This embodiment is a 6th embodiment of the glass container and the plurality of glass containers according to the present invention that preferably depends on any one of the respective 1st to 5th embodiment.

In a further preferred embodiment of the glass container or the plurality of glass containers according to the present invention, the glass container further comprises an inner surface directed to the inside of the glass container, an outer surface directed to the outside of the glass container,

> wherein the inner surface and/or the outer surface exhibits a chemical and/or thermal compressive stress; and/or

> wherein the inner surface and/or the outer surface exhibit a compressive stress of 800 MPa or less, preferably 600 MPa or less, more preferably 400 MPa or less, even more preferably 200 MPa or less, even more preferably 100 MPa or less and most preferably 70 MPa or less; and/or

> wherein the inner surface and/or the outer surface exhibit a compressive stress of 10 MPa or more, preferably 20 MPa or more, more preferably 30 MPa or more, even more preferably 40 MPa or more, even more preferably 50 MPa or more and most preferably 60 MPa or more.

This embodiment is a 7th embodiment of the glass container and the plurality of glass containers according to the present invention that preferably depends on any one of the respective 1st to 6th embodiment.

In a further preferred embodiment of the glass container or the plurality of glass containers according to the present invention, the glass container further comprises an inner surface directed to the inside of the glass container, an outer surface directed to the outside of the glass container,

> wherein the inner surface and/or the outer surface does not exhibit a chemical compressive stress; and/or

wherein the inner surface and/or the outer surface exhibit a compressive stress of 10 MPa or less, preferably 9 MPa or less, more preferably 8 MPa or less, even more preferably 7 MPa or less, even more preferably 6 MPa or less and most preferably 5 MPa or less; and/or

wherein the inner surface and/or the outer surface exhibit a compressive stress of 0.01 MPa or more, preferably 0.1 MPa or more, more preferably 1 MPa or more, even more preferably 2 MPa or more, even more preferably 3 MPa or more and most preferably 4 MPa or more.

This embodiment is an 8th embodiment of the glass container and the plurality of glass containers according to the present invention that preferably depends on any one of the respective 1st to 6th embodiment.

In a further preferred embodiment of the glass container or the plurality of glass containers according to the present invention, the glass container is a pharmaceutical container and/or a vial. This embodiment is a 9th embodiment of the glass container and the plurality of glass containers according to the present invention that preferably depends on any one of the respective 1st to 8th embodiment.

In a further preferred embodiment of the glass container or the plurality of glass containers according to the present invention, the glass container is filled with a composition, preferably a pharmaceutical composition, more preferably a pharmaceutical composition comprising a pharmaceutical active substance. This embodiment is a 10th embodiment of the glass container and the plurality of glass containers according to the present invention that preferably depends on any one of the respective 1st to 9th embodiment.

In a further preferred embodiment of the glass container or the plurality of glass containers according to the present invention, the glass container is closed by a closure device, preferably a stopper or a cap, and/or the glass container is stored in a nest and tub, preferably the tub is sealed with a lid and/or enclosed by at least one bag. This embodiment is an 11th embodiment of the glass container and the plurality of glass containers according to the present invention that preferably depends on any one of the respective 1st to 10th embodiment.

In a further preferred embodiment of the glass container or the plurality of glass containers according to the present invention, the glass container is rotation-symmetric around the longitudinal axis $\mathbf{L_{tube}}$ that goes perpendicular through the centre of the glass bottom. This embodiment is a 12th embodiment of the glass container and the plurality of glass containers according to the present invention that preferably depends on any one of the respective 1st to 11th embodiment.

In a further preferred embodiment of the glass container or the plurality of glass containers according to the present invention, throughout the body region the glass thickness $\mathbf{s_1}$ of the glass tube is in a range from $\pm$ 0.2 mm, preferably $\pm$ 0.1 mm, more preferably $\pm$ 0.08 mm and most preferably $\pm$ 0.05 mm, in each case based on a mean value of this glass thickness in the body region. This embodiment is a 13th embodiment of the glass container and the plurality of glass containers according to the present invention that preferably depends on any one of the respective 1st to 12th embodiment.

In a further preferred embodiment of glass container or the plurality of glass containers according to the present invention, the top region has a maximum outer diameter $\mathbf{d_2} < \mathbf{d_1}$, the top region preferably comprising an opening of the glass container. This preferred embodiment is a 14th embodiment of the glass container and the plurality of glass containers according to the present invention that preferably depends on any one of the respective 1st to 13th embodiment.

In a further preferred embodiment of glass container or the plurality of glass containers according to the present invention, the shoulder region connects the body region with the top region, wherein shoulder region is characterized by a shoulder angle $\alpha$ and wherein $\alpha$ is in the range from 10 to 70°, preferably in the range from 25 to 60°, more preferably in the range from 33 to 55°, even more preferably in the range from 37 to 50° and most preferably in the range from 38° to 45°. This preferred embodiment is a 15th embodiment of the glass container and the plurality of glass containers according to the present invention that preferably depends on any one of the respective 1st to 14th embodiment.

In a further preferred embodiment of the glass container or the plurality of glass containers according to the present invention, the glass container has a mass of glass $\mathbf{m_g}$ and an interior volume $\mathbf{V_i}$ ($\mathbf{V_i}$ representing the overflow capacity of the glass container) and wherein the following condition is fulfilled:

$$\mathbf{m_g}/\mathbf{V_i}^{0.75} < 2.0,$$

$$\text{preferably } \mathbf{m_g}/\mathbf{V_i}^{0.75} < 1.75.$$

This embodiment is an 16th embodiment of the glass container and the plurality of glass containers according to the present invention that preferably depends on any one of the respective 1st to 15th embodiment.

In a further preferred embodiment of the glass container or the plurality of glass containers according to the present invention, at least one of the properties of the glass container selected from the group consisting of $\mathbf{s_1}, \mathbf{d_1}, \mathbf{d_2}, \mathbf{h_1}, \mathbf{V_i}$

and $h_2$ is within the requirements defined in DIN EN ISO 8362-1:2016-06. This embodiment is a 17th embodiment of the glass container and the plurality of glass containers according to the present invention that preferably depends on any one of the respective 1st to 16th embodiment.

In a further preferred embodiment of the glass container or the plurality of glass containers according to the present invention, the glass container is a packaging container for a medical or a pharmaceutical packaging good or both. A preferred pharmaceutical packaging good is a pharmaceutical composition. Preferably, the glass container 1 is suitable for packaging parenteralia in accordance with section 3.2.1 of the European Pharmacopoeia, 7th edition from 2011. This embodiment is an 18th embodiment of the glass container and the plurality of glass containers according to the present invention that preferably depends on any one of the respective 1st to 17th embodiment.

In a further preferred embodiment of the glass container or the plurality of glass containers according to the present invention, the glass is of a type selected from the group consisting of a borosilicate glass, an aluminosilicate glass, soda lime glass and fused silica. "Soda lime glass" according to the invention is an alkaline/alkaline earth/silicate glass according to table 1 of ISO 12775 (1st edition 1997-10-15). This embodiment is a 19th embodiment of the glass container and the plurality of glass containers according to the present invention that preferably depends on any one of the respective 1st to 18th embodiment.

A contribution to solving at least one of the objects according to the invention is also made by a process for filling a glass container in an automated filling line, the process comprising as process steps:

I) providing a glass container or a plurality of glass containers according to the present invention, preferably according to any one of its respective 1st to 19th embodiment;

II) filling the glass containers with a composition, preferably with a liquid pharmaceutical composition, in an automated filling line;

wherein the automated filling line is operated with an overall equipment effectiveness of at least 400 containers per minute, preferably at least 600 containers per minute, more preferably at least 700 containers per minute and most preferably at least 800 containers per minute, these values being the average value determined over an operating time of 1 hour.

A contribution to solving at least one of the objects according to the invention is also made by the use of a glass container or a plurality of glass containers according to the present invention, preferably according to any one of its respective 1st to 19th embodiment, for increasing the overall equipment effectiveness in automated filling lines.

Glass container

The glass container according to the invention or the glass container contained in the plurality of glass containers according to the invention may have any size or shape which the skilled person deems appropriate in the context of the invention, as specified in the claims.

For the use in this document, the interior volume $V_i$ represents the full volume of the interior of the glass container. This volume may be determined by filling the interior of the glass container with water up to the brim and measuring the volume of the amount of water which the interior can take up to the brim. Hence, the interior volume as used herein is not a nominal volume as it is often referred to in the technical field of pharmacy. This nominal volume may for example be less than the interior volume by a factor of about 0.5.

The following are particularly preferred embodiments of the glass container according to the present invention (or of the glass container contained in the plurality of glass containers according to the present invention).

According to a first preferred embodiment of the glass container according to the present invention (or of the glass container contained in the plurality of glass containers according to the present invention) the glass container is a vial with an overflow capacity equal to or larger than 1 ml up to maximal 5 ml, preferably a vial with a size designation "2R" according to DIN EN ISO 8362-1:2016-06, wherein the following conditions i) to iv) are fulfilled:

i) $s_1$ is in the range from 0.9 to 1.15 mm;

ii) $d_1$ is in the range from 15 to 17 mm;

iii) $h_2$ is in the range from 21 to 23 mm;

iv) $C$ is 160 N $\times$ cm$^2$ or more and even more preferably 200 N $\times$ cm$^2$ or more.

According to a second preferred embodiment of the glass container according to the present invention the glass container is a vial with an overflow capacity of larger than 4 ml up to maximal 8 ml, preferably a vial with a size designation "4R" according to DIN EN ISO 8362-1:2016-06, wherein the following conditions i) to iv) are fulfilled:

i) $s_1$ is preferably in the range from 0.9 to 1.15 mm;

ii) $d_1$ is in the range from 15 to 17 mm;

iii) $h_2$ is in the range from 31 to 33 mm;

iv) **C** is 160 N $\times$ cm$^2$ or more and even more preferably 200 N $\times$ cm$^2$ or more.

According to a third preferred embodiment of the glass container according to the present invention the glass container is a vial with an overflow capacity of larger than 8 ml up to maximal 10.75 ml, preferably a vial with a size designation "6R" according to DIN EN ISO 8362-1:2016-06, wherein the following conditions i) to iv) are fulfilled:

i) $s_1$ is preferably in the range from 0.9 to 1.15 mm;

ii) $d_1$ is in the range from 21 to 23 mm;

iii) $h_2$ is in the range from 25 to 27 mm;

iv) **C** is 160 N $\times$ cm$^2$ or more and even more preferably 200 N $\times$ cm$^2$ or more.

According to a fourth preferred embodiment of the glass container according to the present invention the glass container is a vial with an overflow capacity of larger than 10.75 ml up to maximal 12.5 ml, preferably a vial with a size designation "8R" according to DIN EN ISO 8362-1:2016-06, wherein the following conditions i) to iv) are fulfilled:

i) $s_1$ is preferably in the range from 0.9 to 1.15 mm;

ii) $d_1$ is in the range from 21 to 23 mm;

iii) $h_2$ is in the range from 30 to 32 mm;

iv) **C** is 160 N $\times$ cm$^2$ or more and even more preferably 200 N $\times$ cm$^2$ or more.

According to a fifth preferred embodiment of the glass container according to the present invention the glass container is a vial with an overflow capacity of larger than 12.5 ml up to maximal 16.25ml, preferably a vial with a size designation "10R" according to DIN EN ISO 8362-1:2016-06, wherein the following conditions i) to iv) are fulfilled:

i) $s_1$ is preferably in the range from 0.9 to 1.15 mm;

ii) $d_1$ is in the range from 23 to 25 mm;

iii) $h_2$ is in the range from 29 to 31 mm;

iv) **C** is 160 N $\times$ cm$^2$ or more and even more preferably 200 N $\times$ cm$^2$ or more.

According to a sixth preferred embodiment of the glass container according to the present invention the glass container is a vial with an overflow capacity of larger than 16.25 ml up to maximal 22.5ml, preferably a vial with a size designation "15R" according to DIN EN ISO 8362-1:2016-06, wherein the following conditions i) to iv) are fulfilled:

i) $s_1$ is in the range from 0.9 to 1.15 mm;

ii) $d_1$ is in the range from 23 to 25 mm;

iii) $h_2$ is in the range from 44 to 46 mm;

iv) **C** is 160 N $\times$ cm$^2$ or more and even more preferably 200 N $\times$ cm$^2$ or more.

According to a seventh preferred embodiment of the glass container according to the present invention the glass container is a vial with an overflow capacity of larger than 22.5 ml up to maximal 29.25ml, preferably a vial with a size designation "20R" according to DIN EN ISO 8362-1:2016-06, wherein the following conditions i) to iv) are fulfilled:

i) $s_1$ is in the range from 1.15 to 1.25 mm;

ii) $d_1$ is in the range from 29 to 31 mm;

iii) $h_2$ is in the range from 34 to 36 mm;

iv) **C** is 160 N $\times$ cm$^2$ or more and even more preferably 200 N $\times$ cm$^2$ or more.

According to an eighth preferred embodiment of the glass container according to the present invention the glass container is a vial with an overflow capacity of larger than 29.25 ml up to maximal 35 ml, preferably a vial with a size designation "25R" according to DIN EN ISO 8362-1:2016-06, wherein the following conditions i) to iv) are fulfilled:

i) $s_1$ is in the range from 1.15 to 1.25 mm;

ii) $d_1$ is in the range from 29 to 31 mm;

iii) $h_2$ is in the range from 44 to 46 mm;

iv) **C** is 160 N $\times$ cm$^2$ or more and even more preferably 200 N $\times$ cm$^2$ or more.

According to a ninth preferred embodiment of the glass container according to the present invention the glass container is a vial with an overflow capacity of larger than 35 ml up to maximal 49.75ml, preferably a vial with a size designation "30R" according to DIN EN ISO 8362-1:2016-06, wherein the following conditions i) to iv) are fulfilled:

i) $s_1$ is in the range from 1.15 to 1.25 mm;

ii) $d_1$ is in the range from 29 to 31 mm;

iii) $h_2$ is in the range from 54 to 56 mm;

iv) **C** is 160 N $\times$ cm$^2$ or more and even more preferably 200 N $\times$ cm$^2$ or more.

Glass

The glass of the container may be any type of glass and may consist of any material or combination of materials which the skilled person deems suitable in the context of the invention. Preferably, the glass is suitable for pharmaceutical packaging. Particularly preferable, the glass is of type I, more preferably type I b, in accordance with the definitions of glass types in section 3.2.1 of the European Pharmacopoeia, 7th edition from 2011. Additionally, or alternatively preferable to the preceding, the glass is selected from the group consisting of a borosilicate glass, an aluminosilicate glass, soda lime glass and fused silica; or a combination of at least two thereof. For the use in this document, an aluminosilicate glass is a glass which has a content of $Al_2O_3$ of more than 8 wt.-%, preferably more than 9 wt.-%, particularly preferable in a range from 9 to 20 wt.-%, in each case based on the total weight of the glass. A preferred aluminosilicate glass has a content of $B_2O_3$ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of $B_2O_3$ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of $Al_2O_3$ of less than 7.5 wt.-%, preferably less than 6.5 wt.-%, particularly preferably in a range from 0 to 5.5 wt.-%, in each case based on the total weight of the glass. In a further aspect, the borosilicate glass has a content of $Al_2O_3$ in a range from 3 to 7.5 wt.-%, preferably in a range from 4 to 6 wt.-%, in each case based on the total weight of the glass.

A glass which is further preferred according to the invention is essentially free from B. Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass.

Process for preparing the glass container according to the present invention

One approach of preparing a glass container according to the present invention is to apply a process for the preparation of a glass container from a glass tube having an outer diameter $d_1$ and a wall thickness $s_1$ in a glass processing machine,

wherein the glass tube comprises a first portion with a first end, a second portion with a second end and a longitudinal axis $L_{tube}$ that passes through the centre of the first and the second end,

wherein the glass processing machine comprises a plurality of processing stations, first and second clamping chucks which are adapted and arranged to hold the glass tube while rotating the glass tube around its longitudinal axis $L_{tube}$ and to transport the rotating glass tube from one glass container processing station to the next one, a heating device and a mold matrix, preferably a mold matrix that comprises, preferably that is made of, carbon and/or ceramic,

wherein the process comprises the steps of

I) heating the glass tube at a defined position between the first portion and the second portion to a temperature above the glass transition temperature, preferably above the softening temperature of the glass, while the glass tube is rotating around its longitudinal axis $L_{tube}$ and pulling apart the first portion and the second portion thereby separating the first portion from the second portion and forming a closed bottom at one end of the first portion;

II) moving the mold matrix towards the closed bottom and bringing the mold matrix into contact with the closed bottom;

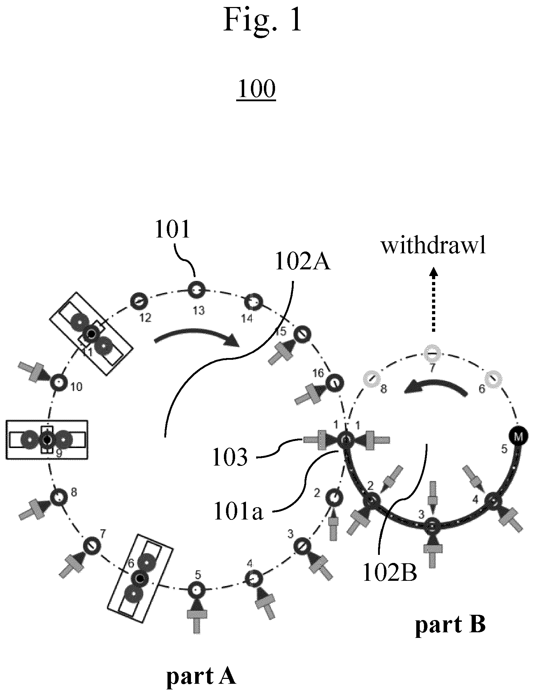

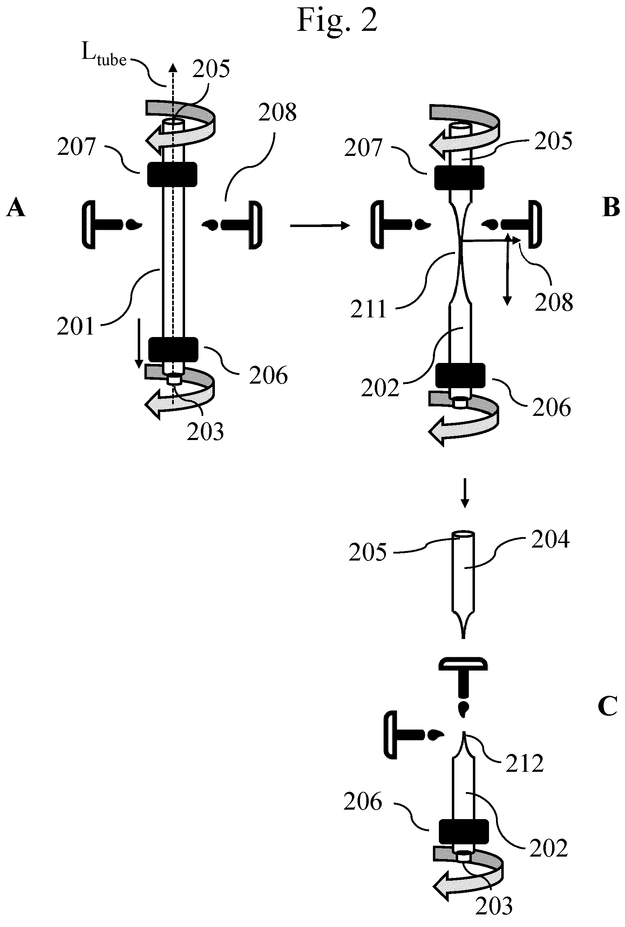

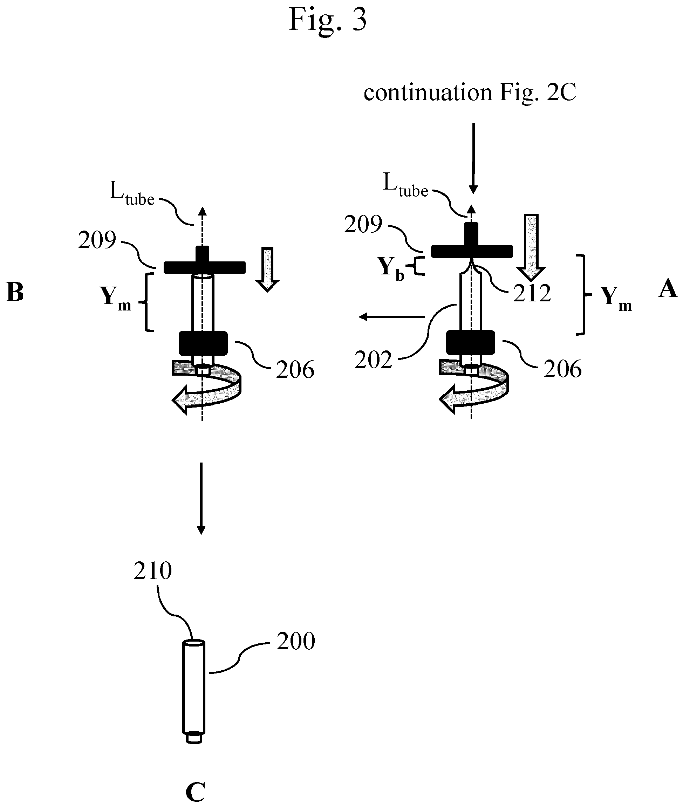

wherein, while bringing the mold matrix into contact with the closed bottom in process step II), a distance $Y_m$ between the mold matrix and the first clamping chuck is decreased stepwise (see Fig. 1 and 2).
The "*softening temperature*" of the glass is the temperature at which the glass has a viscosity (determined according to ISO 7884-6:1987) of $10^{7.6}$ dPa×sec.
The "*distance $Y_m$ between the mold matrix and the first clamping chuck*" is the shortest distance between the upper end of the first clamping chuck and the bottom end of the mold matrix, i. e., the surface of the mold matrix that comes into contact with the mass of molten glass, wherein $Y_m$ is measured in a direction parallel to longitudinal axis $L_{tube}$ as shown in Fig. 3A and 3B.
Preferably, the first and second clamping chucks are adapted and arranged to hold the glass tube in a vertical position;

wherein the second portion of the glass tube corresponds to the upper portion of the glass tube having an upper end and the first portion of the glass tube corresponds to the lower portion of the glass tube having a lower end;

wherein the first clamping chucks are arranged as lower clamping chucks holding the lower portion of the glass tube and the second clamping chucks are arranged as upper clamping chucks holding the upper portion of the glass tube;

and/or, preferably and
wherein the one end is opposite of the lower end.
In a further preferred embodiment of this process, the process further comprises a step Ia), between process step I) and process step II), of heating the closed bottom to a temperature above the glass transition temperature, preferably above the softening temperature of the glass.
In a further preferred embodiment of this, the process further comprises a step Ia), between process step I) and process step II), of heating the closed bottom to a temperature above the glass transition temperature, preferably above the softening temperature of the glass.
In a further preferred embodiment of this, the process further comprises a step Ib), between process step I) and process step II), preferably between step Ia) and step II), of moving the mold matrix towards the closed bottom;

wherein the closed bottom is not in contact with the mold matrix;
and/or, preferably and

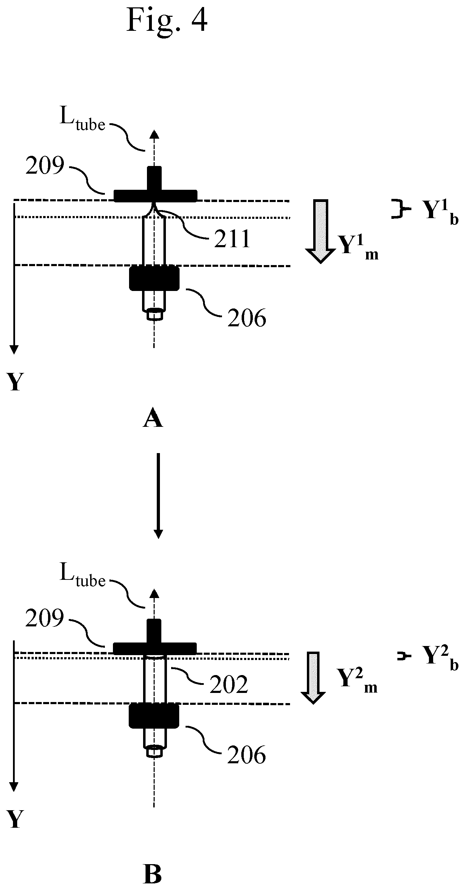

wherein the final distance defined by a gap $Y_b$ between the closed bottom and the mold matrix is 8 mm or more, preferably 10 mm or more, more preferably 12 mm or more, and/or 20 mm or less, preferably 18 mm or less, more preferably 16 mm or less. The "*final distance*" defined by a gap $Y_b$ preferably corresponds to the static distance of the mold matrix from the closed bottom in the corresponding process step after any movement and is measured in a direction parallel to longitudinal axis $L_{tube}$ as shown in Fig. 4. The *"gap $Y_b$"* is preferably the shortest distance between outermost point (largest radius) of closed bottom surface and contact surface of the mold matrix, this distance again being measured in a direction parallel to longitudinal axis $L_{tube}$ as shown in Fig. 4.

In a further preferred embodiment of this process, in process step II), preferably in process steps Ib) and II), the mold matrix is moved downwards;
wherein preferably in process step I) the lower portion of the glass tube is pulled downwards by moving downwards the lower clamping chucks.

In a further preferred embodiment of this process, an air flow is applied through the first end of the first portion towards the closed bottom, preferably during process step II), more preferably during process steps Ia), Ib) and II).

In a further preferred embodiment of this process, an air flow directed towards the closed bottom is applied; preferably during process step II), more preferably during process steps Ib) and II).

In a further preferred embodiment of this process, the distance $Y_m$ between the mold matrix and the first clamping chuck in process step II) is decreased in a first step IIa) and a second step IIb), preferably further decreased in a third step IIc). In this context it is particularly preferred that the mold matrix is in contact with 50% or more, preferably 55% or more, more preferably 60% or more, most preferably 65% or more, and/or 90% or less, preferably 85% or less, more preferably 80% or less, most preferably 75% or less, of the surface area of the closed bottom during the first step IIa). The *"surface area of the closed bottom"* is preferably $\pi \times (d_1/2)^2$, wherein $d_1$ corresponds to outer diameter of the glass tube as that is heated in process step I).

In this context it is also particularly preferred that the mold matrix is in contact with 65% or more, preferably 70% or more, more preferably 75% or more, most preferably 80% or more, and/or 100% or less, preferably 97% or less, more preferably 95% or less, most preferably 90% or less, of the surface area of the closed bottom during the second step IIb).

In a further preferred embodiment of this process, the distance $Y_m$ between the mold matrix and the first clamping chuck is decreased in a first step IIa) by a first distance $Y1_m$ and a second step IIb) by a second distance $Y2_m$, wherein the first step IIa) and the second step IIb) are preferably successive. In this context it is particularly preferred that the first distance $Y1_m$ is larger than the second distance $Y2_m$, wherein the ratio between the first distance $Y1_m$ and the second distance $Y2_m$ is preferably 50 : 1 and/or preferably less than 1000 : 1, more preferably less than 500 : 1 and more preferably less than 100 : 1. In this context it is also preferred that the first distance $Y1_m$ is 19 mm or less, preferably 17 mm or less, more preferably 15 mm or less, most preferably 13 mm or less, and/or 5 mm or more, preferably 7 mm or more, more preferably 9 mm or more, most preferably 11 mm or more. The second distance $Y2_m$ is preferably 1 mm or less, preferably 0.8 mm or less, more preferably 0.6 mm or less, most preferably 0.5 mm or less, and/or 0.1 mm or more, preferably 0.2 mm or more, more preferably 0.3 mm or more, most preferably 0.4 mm or more.

In a further preferred embodiment of this process, there is a time delay $\Delta t$ between the first step IIa) and the second step IIb), wherein it is preferred that the time delay $\Delta t$ is 5 sec or less, preferably 4 sec or less, more preferably 3 sec or less, most preferably 2 sec or less.

In a further preferred embodiment of this process, the final distance defined by a gap $Y_b$ between the mold matrix and closed bottom is in a first step IIa) defined by a first gap $Y1_b$ and in a second step IIb) defined by a second gap $Y2_b$, preferably the first step IIa) and the second step IIb) are successive. Preferably, the first gap $Y1_b$ is larger than the second gap $Y2_b$. In this context it is also preferred that the ratio between the first gap $Y1_b$ and the second gap $Y2_b$ is at least 5 : 1, preferably at least 7 : 1, more at least preferably 10 : 1, at least most preferably 15 : 1 and/or preferably less than 200 : 1, more preferably less than 100 : 1. In this context it is also preferred that the first gap $Y1_b$ is 8 mm or less, preferably 7 mm or less, more preferably 6 mm or less, most preferably 5 mm or less, and/or 1 mm or more, preferably 2 mm or more, more preferably 3 mm or more, most preferably 4 mm or more. It is also preferred that the second gap $Y2_b$ is 2 mm or less, preferably 1 mm or less, more preferably 0.8 mm or less, most preferably 0.6 mm or less, most preferably 0.5 mm or less and/or 0.05 mm or more, preferably 0.1 mm or more, more preferably 0.2 mm or more, most preferably 0.3 mm or more, most preferably 0.4 mm or more.

MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50 %.

Axial compression strength testing

The axial load **A** of the vial is determined by means of vertical load strength testing in accordance to DIN EN ISO 8113 ("Glass containers - Resistance to vertical load - Test methods"), where a compressive force is applied in axial direction and is increased with a constant load rate of 2000 N/min until breakage of the container. During the test the containers are enclosed by a paper bag in order to collect the fragments after breakage.

Determination of fragments

After axial compression strength testing, all fragments are coated (sputtered) with an approximately 45nm thick platinum layer to increase contrast for visual analysis. For each container, the number of all fragments with projected area larger 0.3 mm$^2$, each fragment's individual area and circumference are determined by means of a camera (Cognex IS7905M-353-5, Macro 3-1248, lens: focal distance 18-108 mm, F2.5, illumination: transmission) and visual analysis software (InSight Explorer 4.7.3, Cognex). The fragments are placed in a flat and non-contacting manner on a transmission illumination device.

Wall thicknesses and diameters

The wall thickness $s_1$ of the glass container at a given position as well as the outer diameter ($d_1$) of the glass container at a given position are determined in accordance with DIN ISO 8362-1:2016-06.

EXAMPLE

For inventive example 1 to 3 a glass tube (Fiolax® clear, Schott AG, Germany) having an outer diameter $d_1$ of 16 mm and a wall thickness $s_1$ of 1.0 mm is loaded into the head of a rotary machine. For inventive examples 4 and 5 a glass tube (Fiolax® clear, Schott AG, Germany) having an outer diameter $d_1$ of 30 mm and a wall thickness $s_1$ of 1.2 mm is loaded into the head of a rotary machine. While rotating around its major axis the glass tube is heated to its softening point with separation gas burners as shown in figure 1 and the heated glass is pulled along its major axis by moving the clamping chucks creating two separate portions of glass tube and forming a closed bottom at the upper end of the lower portion. Consecutively, the closed bottom is heated with gas burners to the glass transition temperature and brought into contact with a carbon mold matrix as further depicted in figure 1. When bringing the mold matrix into contact with the closed bottom, the distance is decreased stepwise in a first and second step. The ratio of the distance decreased in the first step to the distance decreased in the second step ($Y^1_m / Y^2_m$; see figure 4) was 30. Furthermore, the second step was performed with a time delay ($\Delta t$) of 1.5 sec after the first step. In a Comparative Example representing the prior-art process the mold matrix is brought into contact with the closed bottom in a single step without any delay. For inventive examples 2 and 3 an ion-exchange post treatment (490°C/20h, 100% $KNO_3$) is performed.

For comparative example 1 representing the prior-art process a glass tube (Fiolax® clear, Schott AG, Germany) having an outer diameter $d_1$ of 16 mm and a wall thickness $s_1$ of 1.0 mm is loaded into the head of a rotary machine. For comparative example 2 a glass tube (Fiolax® clear, Schott AG, Germany) having an outer diameter $d_1$ of 30 mm and a wall thickness $s_1$ of 1.2 mm is loaded into the head of a rotary machine. The mold matrix is not brought into contact with the closed bottom stepwise as shown in Fig. 3, but in a single step.

For comparative example 3 representing the prior-art process a glass tube (BFX) having an outer diameter $d_1$ of 16 mm and a wall thickness $s_1$ of 1.0 mm is loaded into the head of a rotary machine. The mold matrix is not brought into contact with the closed bottom stepwise as shown in Fig. 3, but in a single step. Additionally, an ion exchange post treatment at 450°C for 12 h with $KNO_3$ is performed.

|  | axial load **A** | number of fragments **B** | **h$_2$** | fracture ratio **C** |
|---|---|---|---|---|
| inventive example 1 (2R) | 3885 N | 119 | 22 mm | 427 N $\times$ cm$^2$ |
| inventive example 2 (2R) | 2736 N | 198 | 22 mm | 181 N $\times$ cm$^2$ |
| inventive example 3 (2R) | 2714 N | 273 | 22 mm | 130 N $\times$ cm$^2$ |
| inventive example 4 (30R) | 4175 N | 592 | 55 mm | 415 N $\times$ cm$^2$ |
| inventive example 5 (30R) | 4543 N | 318 | 55 mm | 841 N $\times$ cm$^2$ |
| comp. example 1 (2R) | 802 N | 5 | 22 mm | 2069 N $\times$ cm$^2$ |
| comp. example 2 (30R) | 935 N | 25 | 55 mm | 2203 N $\times$ cm$^2$ |
| comp. example 3 (2R) | 8597 N | 2868 | 22 mm | 39 N $\times$ cm$^2$ |

Unless otherwise specified in the description or the particular figure:

Figure 1 shows a glass processing machine 100 that illustrates a process for the preparation of glass container 300 according to the present invention;

Figures 2A-C illustrate process step I) of this process;

Figures 3A-C illustrate process step II) of this process;

Figure 4 shows in more detail the movement of the mold matrix 209 relative to the first clamping chucks 206 in process II) of this process;

Figure 5 shows a cross-sectional view of a glass container according to the present invention, wherein for the purpose of an improved illustration the parts of the glass container (i. e. glass tube 301, glass bottom 304 and curved glass heel 305) have been separated from each other;

Figure 6 shows a side view of a glass container 300 according to the present invention.

Figure 1 shows a glass processing machine 100 that illustrates a process for the preparation of glass container 300 according to the present invention. In such a glass processing machine 100 both the tubes (part A: large wreath 102A) and the separated vials (part B: small wreath 102B) are held vertically in rotating chucks on two adjacent rotating rings 102A, 102B. This type of machine has the working positions (1 to 16: part A and 1 to 8: part B) arranged one after, between which the tubes and vials are transported by the wreaths in clocked fashion. Station 101a at the point that connects the two rings 102A, 102B corresponds to the separation station at which the glass tube is heated at a defined position by means of two separation gas burners 103 so far that it becomes deformable. As soon as this temperature is reached, the tube - under continuing rotation and heating by means of the burner 103 - is extended in axial direction by means of a linear downwards movement of the lower chuck (see reference number 206 in Fig. 2). Thereby the tube in the heated region extends under simultaneous tapering of its diameter, so that a constriction region in the form of a glass thread results. After the downward movement the constriction region can be further heated. After the lower portion of the glass tube has been finally separated (end of process step I; see Figures 2A-C) of the process according to the present invention), the glass is liquefied on positions 2 to 4 of the B-wreath 102B under massive input of heat at the upper edge of the lower portion of the glass tube in order to finally shape the bottom geometry (see Figures 3A-C).

Figures 2A-C illustrate process step I) of a process that can be used to prepare a glass container according to the present invention as it can be performed, for example, at separation station 101a in glass processing machine shown in figure 1. A glass tube 201 that comprises a first portion 202 with a first end 203, a second portion 204 with a second end 205 and a longitudinal axis $L_{tube}$ that passes through the centre of the first and the second end (203,205) is loaded in a glass processing machine 100 comprising a plurality of processing stations 101, first and second clamping chucks 206,207 which are adapted and arranged to hold the glass tube 201 while rotating the glass tube 201 around its longitudinal axis $L_{tube}$ and to transport the rotating glass tube 201 from one glass container processing station 101 to the next one, a heating device 208 and a mold matrix 209. In process step I) of the process the glass tube 201 is heated at a defined position between the first portion 202 and the second portion 204 to a temperature above the glass transition temperature while the glass tube 201 is rotating around its longitudinal axis $L_{tube}$ (Fig. 2A) and the first portion 202 and the second portion 204 are pulled apart (Fig. 2B). In the process shown in Fig. 2 the first portion 202 and the second portion 204 are pulled apart by moving downwards the lower clamping chucks 206 while the glass tube 201 is rotating around its longitudinal axis $L_{tube}$. When moving downwards the lower clamping chucks 206 and thus also the lower portion 202 of the glass tube 201, a glass thread 211 is formed (see Fig. 2B). At the end of process step I) the first portion 202 is separated from the second portion 204 and a closed bottom 210 is formed at one end 212 of the first portion 202 (Fig. 2C).

Figures 3A-C illustrate process step II) of a process that can be used to prepare a glass container according to the present invention. As shown in that figure, a mold matrix 209 is moved towards the closed bottom 210 and is brought into contact with the closed bottom 210 of the first portion 202. As shown in Fig. 3A-C, the process according to the present invention is characterized in that, while bringing the mold matrix 209 into contact with the closed bottom 210, a distance $Y_m$ between the mold matrix 209 and the first clamping chuck 206 is decreased stepwise, wherein - as shown by means of the dashed lines in Fig. 4 - $Y_m$ is the shortest distance between the upper end of the first clamping chuck 206 and the bottom end of the mold matrix 209, i. e., the surface of the mold matrix 209 that comes into contact with the mass of molten glass at the closed bottom 210, wherein $Y_m$ is measured in a direction parallel to longitudinal axis $L_{tube}$. In the preferred embodiment of the process as shown in Figures 2 and 3, the first and second clamping chucks 206,207 are adapted and arranged to hold the glass tube 201 in a vertical position, wherein the second portion 204 of the glass tube 201 corresponds to the upper portion 204 of the glass tube 201 having an upper end 205 and the first portion 202 of the glass tube 201 corresponds to the lower portion 202 of the glass tube 201 having a lower end 203. Accordingly, the first clamping chucks 206 are arranged as lower clamping chucks 206 holding the lower portion 202 of the glass tube 201 and the second clamping chucks 207 are arranged as upper clamping chucks 207 holding the upper portion 204 of the glass tube 201, wherein the one end 212 is opposite of the lower end 203.

Fig. 4 shows in more detail the movement of the mold matrix 209 relative to the first clamping chucks 206 in process II) of the process that can be used to prepare a glass container according to the present invention. As shown in that figure, distance $Y_m$ between the mold matrix 209 and the first clamping chuck 206 is decreased in a first step (as shown in Fig. 4A) by a first distance $Y^1_m$ and a second step (as shown in Fig. 4B) by a second distance $Y^2_m$, preferably the first step and the second step are successive. As shown in Fig. 4, the first distance $Y^1_m$ is larger than the second distance $Y^2_m$, wherein the first distance $Y^1_m$ is 19 mm or less, and the second distance $Y^2_m$ is 1 mm or less. Preferably, there is a time delay $\Delta t$ between the first step shown in Fig. 4A and the second step shown in Fig. 4B, wherein $\Delta t$ preferably is 1.5 sec or more.

As also shown in Fig. 4, a final distance defined by a gap $Y_b$ between the mold matrix 209 and closed bottom 210 is in the first step preferably defined by a first gap $Y^1_b$ and in the second step preferably defined by a second gap $Y^2_b$, wherein it is also preferred that the first gap $Y^1_b$ is larger than the second gap $Y^2_b$. It is also preferred that the first gap $Y^1_b$ is 8 mm or less and that the second gap $Y^2_b$ is 2 mm or less.

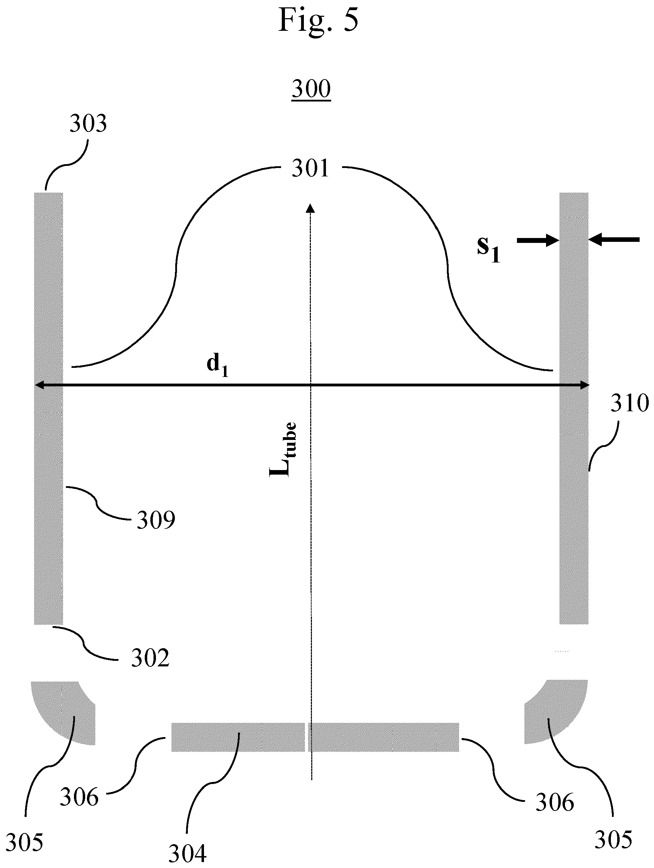

Figure 5 shows a cross-sectional view of a glass container 300 according to the invention. For the purpose of an improved illustration the individual parts of the glass container (i. e. glass tube 301, glass bottom 304 and curved glass heel 305) have been separated from each other. However, as the glass container 300 according to the invention is preferably obtained by a process in which a mother tube (which forms glass tube 301), while rotating around its major axis, is heated to its softening point with flames, in which the heated glass is pulled along its major axis for stretching and creating a container closure and in which the container closure has been shaped to form a glass bottom 304 and a curved glass heel 305, these parts are integrally connected in the glass container 300 according to the present invention. As shown in figure 5, the glass tube 301 is characterized by a first end 302 and a further end 303. The glass bottom 304 comprises an outer region 306 that in the glass container 300 is connected to the curved glass heel 305. The glass tube 301 is characterized by a longitudinal axis $L_{tube}$, an outer diameter $d_1$ and a wall thickness $s_1$.

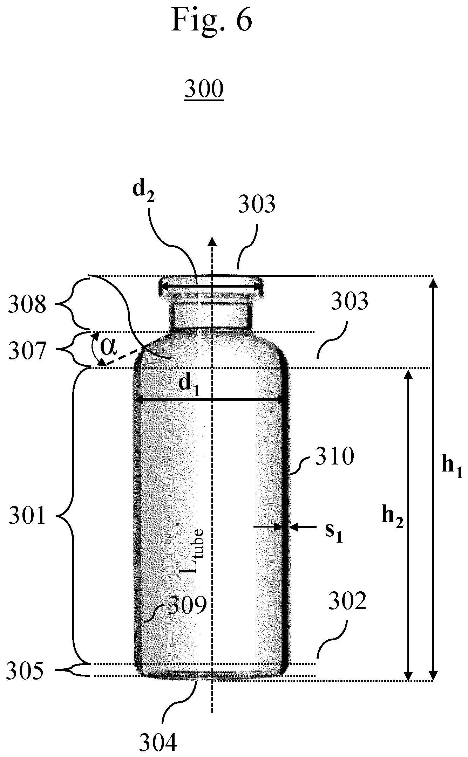

Figure 6 shows a side view of glass container 300 according to the present invention. The glass container 300 comprises as a container part a glass body 301 in the form of a glass tube having a glass thickness $s_1$ and an outer diameter $d_1$ with a first end 302 and a further end 303, the glass body 301 being characterized by a longitudinal axis $L_{tube}$ that passes through the centre of the first and the further end 302,303. The glass container 300 further comprises as a container part a circular glass bottom 304 that closes the glass body 301 at the first end 302. The glass container 300 further comprises a curved glass heel 305 extending from an outer end of the circular glass bottom 304 to the first end 302 of the glass body 301. In addition to the container parts shown in Fig. 5, the glass container 300 further comprises a top region 308 in which the maximum outer diameter of the glass tube is $d_2 < d_1$, the top region preferably comprising an opening of the glass container, and a shoulder region 307 that connects the further end 303 of the body region 301 with the top region 308, wherein the shoulder region 307 is characterized by a shoulder angle $\alpha$.

LIST OF REFERENCE NUMERALS

| | |
|---|---|
| **100** | glass processing machine |
| **101,101a,101b,101c** | processing stations |
| **102,102A,102B** | circle (or wreath) comprising processing stations 107 |
| **103** | separation gas burner |

| | |
|---|---|
| **200** | glass container |
| **201** | glass tube |
| **202** | first or lower portion of the glass tube 201 |
| **203** | first or lower end of the first or lower portion 202 |
| **204** | second or upper portion of the glass tube 201 |
| **205** | second or upper end of the second or upper portion 204 |
| **206** | first or lower clamping chucks |
| **207** | second or upper clamping chucks |
| **208** | heating device, preferably a separation gas burner |
| **209** | mold matrix |
| **210** | closed bottom |
| **211** | glass thread |
| **212** | one end of the first or lower end of the first or lower portion 202 |

| | |
|---|---|
| **300** | glass container |
| **301** | glass body |
| **302** | first end of glass body 301 |
| **303** | further end of glass body 301 |
| **304** | glass bottom |

| 305 | curved glass heel |
| 306 | outer end of the glass bottom 304 |
| 307 | shoulder region |
| 308 | top region |
| 309 | inner surface of the glass container |
| 310 | outer surface of the glass container |

**Claims**

1. A glass container (300), comprising as container parts:

   i) a top region (308);
   ii) a shoulder region (307);
   iii) a body region (301) with first end (302) and a second end (303), wherein the second end (303) is adjacent to the shoulder region (307), wherein the body region (301) has an outer diameter $d_1$ and a glass thickness $s_1$, the body region (301) being **characterized by** a longitudinal axis $L_{tube}$ that passes through the centre of the first and the second end (302,303);
   iv) a circular glass bottom (304), wherein the circular glass bottom (304) closes the body region (301) at the first end (302);
   v) a curved glass heel (305) extending from an outer end (306) of the circular glass bottom (304) to the first end (302) of the body region (301);

   wherein, when the glass container (300) is standing on a support surface with the circular glass bottom (304) being in contact with the support surface, $h_2$ is the distance between the support surface up to second end (303) of the body region (301);
   wherein the following condition is fulfilled:

$$(A \times X) / B = C,$$

   wherein

   - **A** is the axial load in N, which is necessary to break the glass container (300) to obtain fragments,
   - **X** is the normalized area in cm$^2$ defined as

$$h_2 \times d_1 \times \pi + d_1^2/4 \times \pi,$$

   - **B** is the number of fragments of the glass container (300), each fragment having a fragment area of 0.3 mm$^2$ or more and 1.0 mm$^2$ or less, and
   - **C** is the fracture ratio,

   wherein **C** is 120 N $\times$ cm$^2$ or more,
   wherein **A** is 2500 N or more and 6000 N or less;
   wherein **B** is 150 or more and 1000 or less;
   wherein the glass container (300) is obtainable by a process for the preparation of a glass container from a glass tube (201) having an outer diameter $d_1$ and a wall thickness $s_1$ in a glass processing machine (100), wherein the glass tube (201) comprises a first portion (202) with a first end (203), a second portion (204) with a second end (205) and a longitudinal axis $L_{tube}$ that passes through the centre of the first and the second end (203,205),
   wherein the glass processing machine (100) comprises a plurality of processing stations (101,101a,101b,101c), first and second clamping chucks (206, 207) which are adapted and arranged to hold the glass tube (201) while rotating the glass tube (201) around its longitudinal axis $L_{tube}$ and to transport the rotating glass tube (201) from one glass container processing station to the next one, a heating device (208) and a mold matrix (209),
   wherein the process comprises the steps of

   I) heating the glass tube (201) at a defined position between the first portion (202) and the second portion (204) to a temperature above the glass transition temperature, of the glass, while the glass tube (201) is rotating around its longitudinal axis $L_{tube}$ and pulling apart the first portion (202) and the second portion (204), thereby separating the first portion (202) from the second portion (204) and forming a closed bottom (210) at one end of the first portion (202);

II) moving the mold matrix (209) towards the closed bottom (210) and bringing the mold matrix (209) into contact with the closed bottom (210);

wherein, while bringing the mold matrix (209) into contact with the closed bottom (210) in process step II), a distance $Y_m$ between the mold matrix (209) and the first clamping chuck (206) is decreased stepwise in a first step IIa) by a distance $Y^1_m$ and a second step IIb) by a distance $Y^2_m$, wherein $Y_m$ is the shortest distance between the upper end of the first clamping chuck (206) and the bottom end of the mold matrix (209) and wherein $Y_m$ is measured in a direction parallel to longitudinal axis $L_{tube}$;

wherein there is a time delay $\Delta t$ between the first step IIa) and the second step IIb) of 1.5 sec or more;

wherein the ratio of the distance decreased in the first step IIa) to the distance decreased in the second step IIb) $Y^1_m / Y^2_m$ is at least 30;

wherein the glass container (300) is selected from the group consisting of:

- a vial with a size designation "2R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 15 to 17 mm;
   iii) $h_2$ is in the range from 21 to 23 mm;

- a vial with a size designation "4R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 15 to 17 mm;
   iii) $h_2$ is in the range from 31 to 33 mm;

- a vial with a size designation "6R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 21 to 23 mm;
   iii) $h_2$ is in the range from 25 to 27 mm;

- a vial with a size designation "8R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 21 to 23 mm;
   iii) $h_2$ is in the range from 30 to 32 mm;

- a vial with a size designation "10R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 23 to 25 mm;
   iii) $h_2$ is in the range from 29 to 31 mm;

- a vial with a size designation "15R" according to DIN EN ISO 8362-1:2016-06, wherein the following conditions i) to iii) are fulfilled:

   i) $s_1$ is in the range from 0.9 to 1.15 mm;
   ii) $d_1$ is in the range from 23 to 25 mm;
   iii) $h_2$ is in the range from 44 to 46 mm;

- a vial with a size designation "20R" according to DIN EN ISO 8362-1:2016-06, wherein the following conditions i) to iii) are fulfilled:

    i) $s_1$ is in the range from 1.15 to 1.25 mm;
    ii) $d_1$ is in the range from 29 to 31 mm;
    iii) $h_2$ is in the range from 34 to 36 mm;

- a vial with a size designation "25R" according to DIN EN ISO 8362-1:2016-06, wherein the following conditions i) to iii) are fulfilled:

    i) $s_1$ is in the range from 1.15 to 1.25 mm;
    ii) $d_1$ is in the range from 29 to 31 mm;
    iii) $h_2$ is in the range from 44 to 46 mm;

- a vial with a size designation "30R" according to DIN EN ISO 8362-1:2016-06, wherein the following conditions i) to iii) are fulfilled:

    i) $s_1$ is in the range from 1.15 to 1.25 mm;
    ii) $d_1$ is in the range from 29 to 31 mm;
    iii) $h_2$ is in the range from 54 to 56 mm.

2. The glass container (300) according to claim 1, wherein the fragment area is 0.35 mm$^2$ or more and 0.95 mm$^2$ or less.

3. The glass container (300) according to claim 1 or 2, wherein the ratio of number of fragments to normalized area **X** is 0.5 cm$^{-2}$ or more and/or 200 cm$^{-2}$ or less.

4. The glass container (300) according to anyone of the preceding claims, wherein the glass container (300) further comprises an inner surface (309) directed to the inside of the glass container (300), an outer surface (310) directed to the outside of the glass container (300),

    wherein the inner surface (309) and/or the outer surface (310) exhibits a chemical and/or thermal compressive stress; and/or
    wherein the inner surface (309) and/or the outer surface (310) exhibit a compressive stress of 800 MPa or less; and/or
    wherein the inner surface (309) and/or the outer surface (310) exhibit a compressive stress of 10 MPa or more.

5. The glass container (300) according to anyone of the preceding claims, wherein the glass container (300) further comprises an inner surface (309) directed to the inside of the glass container (300), an outer surface (310) directed to the outside of the glass container (300),

    wherein the inner surface (309) and/or the outer surface (310) does not exhibit a chemical compressive stress; and/or
    wherein the inner surface (309) and/or the outer surface (310) exhibit a compressive stress of 10 MPa or less; and/or
    wherein the inner surface (309) and/or the outer surface (310) exhibit a compressive stress of 0.01 MPa or more.

6. The glass container (300) according to anyone of the preceding claims, wherein the glass container (300) is filled with a composition, preferably a pharmaceutical composition, more preferably comprising a pharmaceutical active substance.

7. The glass container (300) according to anyone of the preceding claims, wherein the glass container (300) is closed by a closure device, preferably a stopper or a cap.

8. Plurality of glass containers (300), each glass container (300) comprising as container parts

    i) a top region (308);
    ii) a shoulder region (307);
    iii) a body region (301) with first end (302) and a second end (303), wherein the second end (303) is adjacent to the shoulder region (307), wherein the body region (301) has an outer diameter $d_1$ and a glass thickness $s_1$, the body region (301) being **characterized by** a longitudinal axis $L_{tube}$ that passes through the centre of the first and the second end (302,303);

iv) a circular glass bottom (304), wherein the circular glass bottom (304) closes the body region (301) at the first end (302);

v) a curved glass heel (305) extending from an outer end (306) of the circular glass bottom (304) to the first end (302) of the body region (301);

wherein, when the glass container (300) is standing on a support surface with the circular glass bottom (304) being in contact with the support surface, $h_2$ is the distance between the support surface up to second end (303) of the body region (301);

wherein the following condition is fulfilled:

$$(A \times X) / B = C$$

wherein

- **A** is the median of the axial load in N of the plurality of glass containers, which is necessary to break each glass container to obtain fragments,
- **X** is the normalized area in cm$^2$ defined as

$$h_2 \times d_1 \times \pi + d_1{}^2/4 \times \pi,$$

- **B** is the median value of the number of fragments of the plurality of glass container, each fragment having a fragment area of 0.3 mm$^2$ or more and 1.0 mm$^2$ or less, and
- **C** is the fracture ratio;

wherein **A** is 2500 N or more and 6000 N or less;

wherein **B** is 150 or more and 1000 or less;

wherein the plurality of glass containers (300) comprises at least 100 glass containers (300),

wherein for at least 50% of the glass containers (300) contained in the plurality of glass containers (300) the fracture ratio **C** is 120 N $\times$ cm$^2$ or more;

wherein the glass container (300) is obtainable by a process for the preparation of a glass container from a glass tube (201) having an outer diameter $d_1$ and a wall thickness $s_1$ in a glass processing machine (100), wherein the glass tube (201) comprises a first portion (202) with a first end (203), a second portion (204) with a second end (205) and a longitudinal axis $L_{tube}$ that passes through the centre of the first and the second end (203,205),

wherein the glass processing machine (100) comprises a plurality of processing stations (101,101a,101b,101c), first and second clamping chucks (206, 207) which are adapted and arranged to hold the glass tube (201) while rotating the glass tube (201) around its longitudinal axis $L_{tube}$ and to transport the rotating glass tube (201) from one glass container processing station to the next one, a heating device (208) and a mold matrix (209);

wherein the process comprises the steps of

I) heating the glass tube (201) at a defined position between the first portion (202) and the second portion (204) to a temperature above the glass transition temperature, of the glass, while the glass tube (201) is rotating around its longitudinal axis $L_{tube}$ and pulling apart the first portion (202) and the second portion (204), thereby separating the first portion (202) from the second portion (204) and forming a closed bottom (210) at one end of the first portion (202);

II) moving the mold matrix (209) towards the closed bottom (210) and bringing the mold matrix (209) into contact with the closed bottom (210); wherein, while bringing the mold matrix (209) into contact with the closed

bottom (210) in process step II), a distance $Y_m$ between the mold matrix (209) and the first clamping chuck (206) is decreased stepwise in a first step IIa) by a distance $Y^1{}_m$ and a second step IIb) by a distance $Y^2{}_m$, wherein $Y_m$ is the shortest distance between the upper end of the first clamping chuck (206) and the bottom end of the mold matrix (209) and wherein $Y_m$ is measured in a direction parallel to longitudinal axis $L_{tube}$;

wherein there is a time delay $\Delta t$ between the first step IIa) and the second step IIb) of 1.5 sec or more; wherein the ratio of the distance decreased in the first step IIa) to the distance decreased in the second step IIb) $Y^1_m / Y^2_m$ is at least 30;

wherein the glass container (300) is selected from the group consisting of:

- a vial with a size designation "2R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 15 to 17 mm;
    iii) $h_2$ is in the range from 21 to 23 mm;

- a vial with a size designation "4R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 15 to 17 mm;
    iii) $h_2$ is in the range from 31 to 33 mm;

- a vial with a size designation "6R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 21 to 23 mm;
    iii) $h_2$ is in the range from 25 to 27 mm;

- a vial with a size designation "8R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 21 to 23 mm;
    iii) $h_2$ is in the range from 30 to 32 mm;

- a vial with a size designation "10R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 23 to 25 mm;
    iii) $h_2$ is in the range from 29 to 31 mm;

- a vial with a size designation "15R" according to DIN EN ISO 8362-1:2016-06, wherein the following conditions i) to iii) are fulfilled:

    i) $s_1$ is in the range from 0.9 to 1.15 mm;
    ii) $d_1$ is in the range from 23 to 25 mm;
    iii) $h_2$ is in the range from 44 to 46 mm;

- a vial with a size designation "20R" according to DIN EN ISO 8362-1:2016-06, wherein the following conditions i) to iii) are fulfilled:

    i) $s_1$ is in the range from 1.15 to 1.25 mm;
    ii) $d_1$ is in the range from 29 to 31 mm;
    iii) $h_2$ is in the range from 34 to 36 mm;

- a vial with a size designation "25R" according to DIN EN ISO 8362-1:2016-06, wherein the following conditions i) to iii) are fulfilled:

i) $s_1$ is in the range from 1.15 to 1.25 mm;
ii) $d_1$ is in the range from 29 to 31 mm;
iii) $h_2$ is in the range from 44 to 46 mm;

- a vial with a size designation "30R" according to DIN EN ISO 8362-1:2016-06, wherein the following conditions i) to iii) are fulfilled:

i) $s_1$ is in the range from 1.15 to 1.25 mm;
ii) $d_1$ is in the range from 29 to 31 mm;
iii) $h_2$ is in the range from 54 to 56 mm.

9. A process for filling a glass container (300) in an automated filling line, the process comprising as process steps:

I) providing a glass container (300) according to any one of claims 1 to 7 or a plurality of glass containers (300) according to claim 8;
II) filling the glass containers (300) with a composition, preferably with a liquid pharmaceutical composition, in an automated filling line;

wherein the automated filling line is operated with an overall equipment effectiveness of at least 400 glass containers (300) per minute, this value being the average value determined over an operating time of 1 hour.

10. Use of a glass container (300) according to any one of claims 1 to 7 or of a plurality of glass containers (300) according to claim 8 for increasing the overall equipment effectiveness in automated filling lines.

**Patentansprüche**

1. Ein Glasbehälter (300), der als Behälterteile umfasst:

i) einen oberen Bereich (308);
ii) einen Schulterbereich (307);
iii) einen Rumpfbereich (301) mit einem ersten Ende (302) und einem zweiten Ende (303), wobei das zweite Ende (303) an den Schulterbereich (307) angrenzt, wobei der Rumpfbereich (301) einen Außendurchmesser $d_1$ und eine Glasdicke $s_1$ aufweist, wobei der Körperbereich (301) durch eine Längsachse $L_{tube}$ gekennzeichnet ist, die durch den Mittelpunkt des ersten und des zweiten Endes (302, 303) verläuft;
iv) einen kreisförmigen Glasboden (304) mit einem Durchmesser d(1) und einer Glasdicke s , wobei der kreisförmige Glasboden (304) den Körperbereich (301) am ersten Ende (302) verschließt;
v) einen gekrümmten Glasfuß (305), der sich von einem äußeren Ende (306) des kreisförmigen Glasbodens (304) bis zum ersten Ende (302) des Körperbereichs (301) erstreckt;

wobei, wenn der Glasbehälter (300) auf einer Auflagefläche steht und der kreisförmige Glasboden (304) die Auflagefläche berührt, $h_2$ der Abstand zwischen der Auflagefläche und dem zweiten Ende (303) des Körperbereichs (301) ist;
wobei die folgende -Bedingung erfüllt ist:

$$(\mathbf{A} \times \mathbf{X}) / \mathbf{B} = \mathbf{C} ,$$

wobei

- A die axiale Belastung in N ist, die erforderlich ist, um den Glasbehälter (300) zu zerbrechen und Fragmente zu erhalten ,
- $\mathbf{X}$ ist die normierte Fläche in cm$^2$und definiert als

$$\mathbf{h_2} \times \mathbf{d_1} \times \pi + \mathbf{d_1}^2/4 \times \pi,$$

- $\mathbf{B}$ die Anzahl der Bruchstücke des Glasbehälters (300) ist, wobei jedes Bruchstück eine Bruchstück fläche von 0,3 $^{mm2}$ oder mehr und 1,0 $^{mm2}$ oder weniger, aufweist und

- **C** ist das Bruchverhältnis,

wobei **C** 120 N$\times$ cm$^2$ oder mehr beträgt,
wobei **A** 2500 N oder mehr und 6000 N oder weniger beträgt;
wobei **B** 150 oder mehr und 1000 oder weniger beträgt;
wobei der Glasbehälter (200) durch ein Verfahren zur Herstellung eines Glasbehälters aus einem Glasrohr (201) mit einem Außendurchmesser $d_1$ und einer Wandstärke $s_1$ in einer Glasverarbeitungsmaschine (100) erhältlich ist,
wobei das Glasrohr (201) einen ersten Abschnitt (202) mit einem ersten Ende (203), einen zweiten Abschnitt (204) mit einem zweiten Ende (205) und eine Längsachse $L_{Rohr}$ aufweist,die durch den Mittelpunkt des ersten und des zweiten Endes (203, 205) verläuft,
wobei die Glasverarbeitungsmaschine (100) eine Vielzahl von Verarbeitungsstationen (101, 101a, 101b, 101c), erste und zweite Spannfutter (206, 207) umfasst, die dazu ausgelegt und angeordnet sind, das Glasrohr (201) zu halten, während das Glasrohr (201) um seine Längsachse $L_{Rohr}$ und den rotierenden Glasrohr (201) von einer Glasbehälter-Bearbeitungsstation zur nächsten zu transportieren, eine Heizvorrichtung (208) und eine Formmatrize (209),
wobei das Verfahren die folgenden Schritte umfasst:

I) Erwärmen des Glasrohrs (201) an einer definierten Position zwischen dem ersten Abschnitt (202) und dem zweiten Abschnitt (204) auf eine Temperatur oberhalb der Glasübergangstemperatur des Glases, während sich das Glasrohr (201) um seine Längsachse $L_{Rohr}$dreht, und Auseinanderziehen des ersten Abschnitts (202) und des zweiten Abschnitts (204), wodurch der erste Abschnitt (202) vom zweiten Abschnitt (204) getrennt und an einem Ende des ersten Abschnitts (202) ein geschlossener Boden (210) gebildet wird;

II) Bewegen der Formmatrize (209) in Richtung des geschlossenen Bodens (210) und Inkontaktbringen der Formmatrize (209) mit dem geschlossenen Boden (210);

wobei beim Inkontaktbringen der Formmatrize (209) mit dem geschlossenen Boden (210) in Prozessschritt II) ein Abstand $Y_m$zwischen der Formmatrize (209) und dem ersten Spannfutter (206) schrittweise in einem ersten Schritt IIa) um einen Abstand $Y^1_m$und in einem zweiten Schritt IIb) um einen Abstand $Y^2_{(m)\,verringert}$wird, wobei $Y_m$ der kürzeste Abstand zwischen dem oberen Ende des ersten Spannfutters (206) und dem unteren Ende der Formmatrize (209) ist und wobei $Y_m$ in einer Richtung parallel zur Längsachse $L_{Rohr}$ gemessen wird;
wobei zwischen dem ersten Schritt IIa) und dem zweiten Schritt IIb) eine Zeitverzögerung$\Delta$ **t** von 1,5 Sekunden oder mehr besteht;
wobei das Verhältnis des im ersten Schritt IIa) verringerten Abstands zum im zweiten Schritt IIb) verringerten Abstand $Y^1_m$/ $Y^2_m$mindestens 30 beträgt;
wobei der Glasbehälter (300) aus der Gruppe ausgewählt ist, bestehend aus:

- einer Durchstechflasche mit der Größenbezeichnung "2R" gemäß DIN EN ISO 8362-1:2016-06, wobei die folgenden Bedingungen i) bis iii) erfüllt sind:

i) $s_1$ im Bereich von 0,9 bis 1,15 mm liegt;
ii) $d_1$ liegt im Bereich von 15 bis 17 mm;
iii) $h_2$ im Bereich von 21 bis 23 mm liegt;

- eine Durchstechflasche mit der Größenbezeichnung "4R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 15 bis 17 mm;
iii) $h_2$ im Bereich von 31 bis 33 mm liegt;

- eine Durchstechflasche mit der Größenbezeichnung "6R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 21 bis 23 mm;

iii) $h_2$ im Bereich von 25 bis 27 mm liegt;

- eine Durchstechflasche mit der Größenbezeichnung "8R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 21 bis 23 mm;
iii) $h_2$ im Bereich von 30 bis 32 mm liegt;

- eine Durchstechflasche mit der Größenbezeichnung "10R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 23 bis 25 mm;
iii) $h_2$ liegt im Bereich von 29 bis 31 mm;

- eine Durchstechflasche mit der Größenbezeichnung "15R" gemäß DIN EN ISO 8362-1:2016-06, , wobei die folgenden Bedingungen i) bis iii) erfüllt sind:

i) $s_1$ liegt im Bereich von 0,9 bis 1,15 mm;
ii) $d_1$ liegt im Bereich von 23 bis 25 mm;
iii) $h_2$ im Bereich von 44 bis 46 mm liegt;

- eine Durchstechflasche mit der Größenbezeichnung "20R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ liegt im Bereich von 29 bis 31 mm;
iii) $h_2$ im Bereich von 34 bis 36 mm liegt;

- eine Durchstechflasche mit der Größenbezeichnung "25R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ liegt im Bereich von 29 bis 31 mm;
iii) $h_2$ im Bereich von 44 bis 46 mm liegt;

- eine Durchstechflasche mit der Größenbezeichnung "30R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ liegt im Bereich von 29 bis 31 mm;
iii) $h_2$ im Bereich von 54 bis 56 mm liegt.

2. Glasbehälter (300) nach Anspruch 1, wobei die Fragmentfläche 0,35 $mm^2$ oder mehr und 0,95 $mm^2$ oder weniger beträgt.

3. Glasbehälter (300) nach Anspruch 1 oder 2, wobei das Verhältnis der Anzahl der Fragmente zur normierten Fläche **X** 0,5 $cm^{-2}$ oder mehr und/oder 200 $cm^{-2}$ oder weniger beträgt.

4. Der Glasbehälter (300) nach einem der vorstehenden Ansprüche, wobei der Glasbehälter (300) ferner eine zum Inneren des Glasbehälters (300) gerichtete Innenfläche (309) und eine zum Äußeren des Glasbehälters (300) gerichtete Außenfläche (310) umfasst,

wobei die Innenfläche (309) und/oder die Außenfläche (310) eine chemische und/oder thermische Druckspannung aufweist; und/oder
wobei die Innenfläche (309) und/oder die Außenfläche (310) eine Druckspannung von 800 MPa oder weniger aufweisen; und/oder

wobei die Innenfläche (309) und/oder die Außenfläche (310) eine Druckspannung von 10 MPa oder mehr aufweisen.

**5.** Der Glasbehälter (300) gemäß einem der vorstehenden Ansprüche, wobei der Glasbehälter (300) ferner eine zum Inneren des Glasbehälters (300) gerichtete Innenfläche (309) und eine zum Äußeren des Glasbehälters (300) gerichtete Außenfläche (310) umfasst,

wobei die Innenfläche (309) und/oder die Außenfläche (310) keine chemische Druckspannung aufweist; und/oder

wobei die Innenfläche (309) und/oder die Außenfläche (310) eine Druckspannung von 10 MPa oder weniger aufweisen; und/oder

wobei die Innenfläche (309) und/oder die Außenfläche (310) eine Druckspannung von 0,01 MPa oder mehr aufweisen.

**6.** Der Glasbehälter (300) gemäß einem der vorstehenden Ansprüche, wobei der Glasbehälter (300) mit einer Zusammensetzung, vorzugsweise einer pharmazeutischen Zusammensetzung, gefüllt ist, die noch bevorzugter einen pharmazeutischen Wirkstoff umfasst.

**7.** Der Glasbehälter (300) nach einem der vorstehenden Ansprüche, wobei der Glasbehälter (300) durch eine Verschlussvorrichtung, vorzugsweise einen Stopfen oder eine Kappe, verschlossen ist.

**8.** Mehrere Glasbehälter (300), wobei jeder Glasbehälter (300) als Behälterteile umfasst

i) einen oberen Bereich (308);
ii) einen Schulterbereich (307);
iii) einen Körperbereich (301) mit einem ersten Ende (302) und einem zweiten Ende (303), wobei das zweite Ende (303) an den Schulterbereich (307) angrenzt, wobei der Körperbereich (301) einen Außendurchmesser $d_1$ und eine Glasdicke $s_1$, wobei der Körperbereich (301) durch eine Längsachse $L_{tube}$ gekennzeichnet ist, die durch den Mittelpunkt des ersten und des zweiten Endes (302, 303) verläuft;
iv) einen kreisförmigen Glasboden (304), wobei der kreisförmige Glasboden (304) den Körperbereich (301) am ersten Ende (302) verschließt;
v) einen gekrümmten Glasfuß (305), der sich von einem äußeren Ende (306) des kreisförmigen Glasbodens (304) bis zum ersten Ende (302) des Körperbereichs (301) erstreckt;

wobei, wenn der Glasbehälter (300) auf einer Auflagefläche steht und der kreisförmige Glasboden (304) die Auflagefläche berührt, $h_2$ der Abstand zwischen der Auflagefläche und dem zweiten Ende (303) des Körperbereichs (301) ist;
wobei die folgende Bedingung erfüllt ist:

$$(A \times X) / B = C$$

wobei

- **A** der Median der axialen Belastung in N der Vielzahl von Glasbehältern ist, die erforderlich ist, um jeden Glasbehälter zu zerbrechen und Fragmente zu erhalten,
- **X** die normierte Fläche in cm$^2$ ist definiert als

$$h_2 \times d_1 \times \pi + d_1^2/4 \times \pi,$$

- **B** der Medianwert der Anzahl der Bruchstücke der Vielzahl von Glasbehältern ist, wobei jedes Bruchstück eine Bruchstückfläche von 0,3 mm$^2$ oder mehr und 1,0 mm$^2$ oder weniger aufweist, und
- **C** ist das Bruchverhältnis;

wobei **A** 2500 N oder mehr und 6000 N oder weniger beträgt;
wobei **B** 150 oder mehr und 1000 oder weniger beträgt;
wobei die Vielzahl von Glasbehältern (300) mindestens 100 Glasbehälter (300) umfasst,
wobei für mindestens 50 % der in der Vielzahl von Glasbehältern (300) enthaltenen Glasbehälter (300) das Bruchverhältnis **C** 120 N$^/$×cm$^2$oder mehr beträgt;

wobei der Glasbehälter (200) durch ein Verfahren zur Herstellung eines Glasbehälters aus einem Glasrohr (201) mit einem Außendurchmesser **d$_1$** und einer Wandstärke **s$_1$** in einer Glasverarbeitungsmaschine (100) erhältlich ist,

wobei das Glasrohr (201) einen ersten Abschnitt (202) mit einem ersten Ende (203), einen zweiten Abschnitt (204) mit einem zweiten Ende (205) und eine Längsachse **L$_{Rohr}$** aufweist,die durch den Mittelpunkt des ersten und des zweiten Endes (203, 205) verläuft,

wobei die Glasverarbeitungsmaschine (100) eine Vielzahl von Verarbeitungsstationen (101, 101a, 101b, 101c), erste und zweite Spannfutter (206, 207), die dazu ausgelegt und angeordnet sind, das Glasrohr (201) zu halten, während das Glasrohr (201) um seine Längsachse **L$_{Rohr}$** und den rotierenden Glasrohr (201) von einer Glasbehälter-Bearbeitungsstation zur nächsten zu transportieren, eine Heizvorrichtung (208) und eine Formmatrize (209);

wobei das Verfahren die folgenden Schritte umfasst:

I) Erwärmen des Glasrohrs (201) an einer definierten Stelle zwischen dem ersten Abschnitt (202) und dem zweiten Abschnitt (204) auf eine Temperatur oberhalb der Glasübergangstemperatur des Glases, während sich das Glasrohr (201) um seine Längsachse **L$_{Rohr}$**dreht, und Auseinanderziehen des ersten Abschnitts (202) und des zweiten Abschnitts (204), wodurch der erste Abschnitt (202) vom zweiten Abschnitt (204) getrennt und an einem Ende des ersten Abschnitts (202) ein geschlossener Boden (210) gebildet wird;

II) Bewegen der Formmatrize (209) in Richtung des geschlossenen Bodens (210) und Inkontaktbringen der Formmatrize (209) mit dem geschlossenen Boden (210);

wobei, während die Formmatrize (209) in Prozessschritt II) mit dem geschlossenen Boden (210) in Kontakt gebracht wird, ein Abstand **Y$_m$** zwischen der Formmatrize (209) und dem ersten Spannfutter (206) schrittweise in einem ersten Schritt IIa) um einen Abstand **Y$^1_m$** und in einem zweiten Schritt IIb) um einen Abstand **Y$^2_{(m)\ verringert}$**wird, wobei **Y$_m$** der kürzeste Abstand zwischen dem oberen Ende des ersten Spannfutters (206) und dem unteren Ende der Formmatrize (209) ist und wobei **Y$_m$** in einer Richtung parallel zur Längsachse **L$_{Rohr}$** gemessen wird;

wobei zwischen dem ersten Schritt IIa) und dem zweiten Schritt IIb) eine Zeitverzögerung $\Delta$**t** von 1,5 Sekunden oder mehr besteht;

wobei das Verhältnis des im ersten Schritt IIa) verringerten Abstands zum im zweiten Schritt IIb) verringerten Abstand **Y$^1_m$**/ **Y$^2_m$**mindestens 30 beträgt;

wobei der Glasbehälter (300) aus der Gruppe ausgewählt ist, bestehend aus:

- einer Durchstechflasche mit der Größenbezeichnung "2R" gemäß DIN EN ISO 8362-1:2016-06, wobei die folgenden Bedingungen i) bis iii) erfüllt sind:

    i) **s$_1$** im Bereich von 0,9 bis 1,15 mm liegt;
    ii) **d$_1$** liegt im Bereich von 15 bis 17 mm;
    iii) **h$_2$** im Bereich von 21 bis 23 mm liegt;

- eine Durchstechflasche mit der Größenbezeichnung "4R" gemäß DIN EN ISO 8362-1:2016-06, wobei die folgenden Bedingungen i) bis iii) erfüllt sind:

    i) **s$_1$** liegt im Bereich von 0,9 bis 1,15 mm;
    ii) **d$_1$** liegt im Bereich von 15 bis 17 mm;
    iii) **h$_2$** im Bereich von 31 bis 33 mm liegt;

- eine Durchstechflasche mit der Größenbezeichnung "6R" gemäß DIN EN ISO 8362-1:2016-06, wobei die folgenden Bedingungen i) bis iii) erfüllt sind:

    i) **s$_1$** liegt im Bereich von 0,9 bis 1,15 mm;
    ii) **d$_1$** im Bereich von 21 bis 23 mm liegt;
    iii) **h$_2$** im Bereich von 25 bis 27 mm liegt;

- eine Durchstechflasche mit der Größenbezeichnung "8R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 21 bis 23 mm;
iii) $h_2$ im Bereich von 30 bis 32 mm liegt;

- eine Durchstechflasche mit der Größenbezeichnung "10R" gemäß DIN EN ISO 8362-1:2016-06, wobei die folgenden Bedingungen i) bis iii) erfüllt sind:

i) $s_1$ liegt im Bereich von 0,9 bis 1,15 mm;
ii) $d_1$ liegt im Bereich von 23 bis 25 mm;
iii) $h_2$ im Bereich von 29 bis 31 mm liegt;

- eine Durchstechflasche mit der Größenbezeichnung "15R" gemäß DIN EN ISO 8362-1:2016-06, , wobei die folgenden Bedingungen i) bis iii) erfüllt sind:

i) $s_1$ liegt im Bereich von 0,9 bis 1,15 mm;
ii) $d_1$ liegt im Bereich von 23 bis 25 mm;
iii) $h_2$ im Bereich von 44 bis 46 mm liegt;

- eine Durchstechflasche mit der Größenbezeichnung "20R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ im Bereich von 29 bis 31 mm liegt;
iii) $h_2$ im Bereich von 34 bis 36 mm liegt;

- eine Durchstechflasche mit der Größenbezeichnung "25R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ liegt im Bereich von 29 bis 31 mm;
iii) $h_2$ im Bereich von 44 bis 46 mm liegt;

- eine Durchstechflasche mit der Größenbezeichnung "30R" gemäß DIN EN ISO 8362-1:2016-06, wobei die folgenden Bedingungen i) bis iii) erfüllt sind:

i) $s_1$ liegt im Bereich von 1,15 bis 1,25 mm;
ii) $d_1$ liegt im Bereich von 29 bis 31 mm;
iii) $h_2$ im Bereich von 54 bis 56 mm liegt.

9. Verfahren zum Befüllen eines Glasbehälters (300) in einer automatisierten Abfüllanlage , wobei das Verfahren folgende Verfahrensschritte umfasst:

I) Bereitstellen eines Glasbehälters (300) gemäß einem der Ansprüche 1 bis 7 oder einer Vielzahl von Glasbehältern (300) gemäß Anspruch 8;
II) Befüllen der Glasbehälter (300) mit einer Zusammensetzung, vorzugsweise mit einer flüssigen pharmazeutischen Zusammensetzung, in einer automatisierten Abfüllanlage;

wobei die automatisierte Abfüllanlage mit einer Gesamtanlageneffektivität von mindestens 400 Glasbehältern (300) pro Minute betrieben wird, wobei dieser Wert der über eine Betriebszeit von 1 Stunde ermittelte Durchschnittswert ist.

10. Verwendung eines Glasbehälters (300) gemäß einem der Ansprüche 1 bis 7 oder einer Vielzahl von Glasbehältern (300) gemäß Anspruch 8 zur Steigerung der Gesamtanlageneffektivität in automatisierten Abfüllanlagen.

**Revendications**

1. Récipient en verre (300), comprenant comme parties de récipient :

   i) une partie supérieure (308) ;
   ii) une région d'épaulement (307) ;
   iii) une partie corps (301) avec une première extrémité (302) et une deuxième extrémité (303), la deuxième extrémité (303) étant adjacente à la partie épaulement (307), la partie corps (301) ayant un diamètre extérieur $d_1$ et une épaisseur de verre $s_1$, la partie corps (301) étant **caractérisée par** un axe longitudinal $L_{tube}$ qui passe par le centre des première et deuxième extrémités (302, 303) ;
   iv) un fond en verre circulaire d's (304), dans lequel le fond en verre circulaire (304) ferme la région de corps (301) au niveau de la première extrémité (302) ;
   v) un talon en verre incurvé (305) s'étendant depuis une extrémité extérieure (306) du fond circulaire en verre (304) jusqu'à la première extrémité (302) de la partie corps (301) ;

   dans lequel, lorsque le récipient en verre (300) repose sur une surface d'appui, le fond circulaire en verre (304) étant en contact avec la surface d'appui, $h_2$ est la distance entre la surface d'appui et la deuxième extrémité (303) de la partie corps (301) ;
   dans lequel la condition d' suivante est satisfaite :

   $$(A \times X) / B = C,$$

   où

   - **A** est la charge axiale en N, nécessaire pour briser le récipient en verre (300) afin d'obtenir des fragments,
   - **X** est l'aire normalisée en $cm^2$ définie comme suit :

   $$h_2 \times d_1 \times \pi + d_1^2/4 \times \pi,$$

   - **B** est le nombre de fragments du récipient en verre (300), chaque fragment ayant une surface d' e de 0,3 $mm^2$ ou plus et de 1,0 $mm^2$ ou moins, et
   - **C** est le rapport de fracture,

   où **C** est égal à 120 N $\times$ $cm^2$ ou plus,
   où **A** est compris entre 2500 N et 6000 N ;
   où **B** est compris entre 150 et 1 000 ;
   dans lequel le récipient en verre (200) peut être obtenu par un procédé de fabrication d'un récipient en verre à partir d'un tube en verre (201) ayant un diamètre extérieur $d_1$ et une épaisseur de paroi $s_1$ dans une machine de traitement du verre (100),
   dans lequel le tube en verre (201) comprend une première partie (202) avec une première extrémité (203), une deuxième partie (204) avec une deuxième extrémité (205) et un axe longitudinal $L_{tube}$ qui passe par le centre des première et deuxième extrémités (203, 205),
   dans laquelle la machine de traitement du verre (100) comprend une pluralité de stations de traitement (101, 101a, 101b, 101c), des premier et deuxième mandrins de serrage (206, 207) qui sont adaptés et agencés pour maintenir le tube de verre (201) tout en faisant tourner le tube de verre (201) autour de son axe longitudinal $L_{tube}$ et pour transporter le tube de verre en rotation (201) d'une station de traitement de récipients en verre à la suivante, un dispositif de chauffage (208) et une matrice de moulage (209),
   le procédé comprenant les étapes consistant à

   I) chauffer le tube de verre (201) à une position définie entre la première partie (202) et la deuxième partie (204) à une température supérieure à la température de transition vitreuse du verre, tandis que le tube de verre (201) tourne autour de son axe longitudinal $L_{tube}$ et écarter la première partie (202) et la deuxième partie (204), séparant ainsi la première partie (202) de la deuxième partie (204) et formant un fond fermé (210) à une extrémité de la première partie (202) ;
   II) déplacer la matrice de moulage (209) vers le fond fermé (210) et mettre la matrice de moulage (209) en contact avec le fond fermé (210) ;

dans lequel, tout en amenant la matrice de moule (209) en contact avec le fond fermé (210) lors de l'étape II), une distance $Y_m$ entre la matrice de moule (209) et le premier mandrin de serrage (206) est réduite par paliers, dans une première étape IIa) d'une distance $Y^1_m$ et dans une deuxième étape IIb) d'une distance $Y^2_m$, où $Y_m$ est la distance la plus courte entre l'extrémité supérieure du premier mandrin de serrage (206) et l'extrémité inférieure de la matrice de moule (209) et où $Y_m$ est mesurée dans une direction parallèle à l'axe longitudinal $L_{tube}$ ;

dans lequel il existe un délai $t\Delta t$ entre la première étape IIa) et la deuxième étape IIb) de 1,5 seconde ou plus ;

dans lequel le rapport entre la distance réduite lors de la première étape IIa) et la distance réduite lors de la deuxième étape IIb) $Y^1_m/Y^2_m$ est d'au moins 30 ;

dans lequel le récipient en verre (300) est choisi parmi le groupe constitué de :

- un flacon de taille « 2R » selon la norme DIN EN ISO 8362-1:2016-06, dans lequel les conditions i) à iii) suivantes sont remplies :

    i) $s_1$ est compris entre 0,9 et 1,15 mm ;
    ii) $d_1$ est compris entre 15 et 17 mm ;
    iii) $h_2$ est compris entre 21 et 23 mm ;

- un flacon portant la désignation de taille « 4R » selon la norme DIN EN ISO 8362-1:2016-06, dans lequel les conditions i) à iii) suivantes sont remplies :

    i) $s_1$ est compris entre 0,9 et 1,15 mm ;
    ii) $d_1$ est compris entre 15 et 17 mm ;
    iii) $h_2$ est compris entre 31 et 33 mm ;

- un flacon portant la désignation de taille « 6R » selon la norme DIN EN ISO 8362-1:2016-06, dans lequel les conditions i) à iii) suivantes sont remplies :

    i) $s_1$ est compris entre 0,9 et 1,15 mm ;
    ii) $d_1$ est compris entre 21 et 23 mm ;
    iii) $h_2$ est compris entre 25 et 27 mm ;

- un flacon portant la désignation de taille « 8R » selon la norme DIN EN ISO 8362-1:2016-06, dans lequel les conditions i) à iii) suivantes sont remplies :

    i) $s_1$ est compris entre 0,9 et 1,15 mm ;
    ii) $d_1$ est compris entre 21 et 23 mm ;
    iii) $h_2$ est compris entre 30 et 32 mm ;

- un flacon portant la désignation de taille « 10R » selon la norme DIN EN ISO 8362-1:2016-06, dans lequel les conditions i) à iii) suivantes sont remplies :

    i) $s_1$ est compris entre 0,9 et 1,15 mm ;
    ii) $d_1$ est compris entre 23 et 25 mm ;
    iii) $h_2$ est compris entre 29 et 31 mm ;

- un flacon portant la désignation de taille « 15R » selon la norme DIN EN ISO 8362-1:2016-06, , dans lequel les conditions i) à iii) suivantes sont remplies :

    i) $s_1$ est compris entre 0,9 et 1,15 mm ;
    ii) $d_1$ est compris entre 23 et 25 mm ;
    iii) $h_2$ est compris entre 44 et 46 mm ;

- un flacon portant la désignation de taille « 20R » selon la norme DIN EN ISO 8362-1:2016-06, dans lequel les conditions i) à iii) suivantes sont remplies :

    i) $s_1$ est compris entre 1,15 et 1,25 mm ;
    ii) $d_1$ est compris entre 29 et 31 mm ;

iii) $h_2$ est compris entre 34 et 36 mm ;

- un flacon portant la désignation de taille « 25R » selon la norme DIN EN ISO 8362-1:2016-06, dans lequel les conditions i) à iii) suivantes sont remplies :

i) $s_1$ est compris entre 1,15 et 1,25 mm ;
ii) $d_1$ est compris entre 29 et 31 mm ;
iii) $h_2$ est compris entre 44 et 46 mm ;

- un flacon portant la désignation de taille « 30R » selon la norme DIN EN ISO 8362-1:2016-06, dans lequel les conditions i) à iii) suivantes sont remplies :

i) $s_1$ est compris entre 1,15 et 1,25 mm ;
ii) $d_1$ est compris entre 29 et 31 mm ;
iii) $h_2$ est compris entre 54 et 56 mm.

2. Récipient en verre (300) selon la revendication 1, dans lequel la surface des fragments est de 0,35 $mm^2$ ou plus et de 0,95 $mm^2$ ou moins.

3. Récipient en verre (300) selon la revendication 1 ou 2, dans lequel le rapport entre le nombre de fragments et la surface normalisée X est de 0,5 $cm^{-2}$ ou plus et/ou de 200 $cm^{-2}$ ou moins.

4. Récipient en verre (300) selon l'une quelconque des revendications précédentes, dans lequel le récipient en verre (300) comprend en outre une surface intérieure (309) tournée vers l'intérieur du récipient en verre (300), une surface extérieure (310) tournée vers l'extérieur du récipient en verre (300),

dans lequel la surface interne (309) et/ou la surface externe (310) présente une contrainte de compression chimique et/ou thermique ; et/ou
dans lequel la surface intérieure (309) et/ou la surface extérieure (310) présentent une contrainte de compression de 800 MPa ou moins ; et/ou
dans lequel la surface intérieure (309) et/ou la surface extérieure (310) présentent une contrainte de compression de 10 MPa ou plus.

5. Récipient en verre (300) selon l'une quelconque des revendications précédentes, dans lequel le récipient en verre (300) comprend en outre une surface intérieure (309) tournée vers l'intérieur du récipient en verre (300), une surface extérieure (310) tournée vers l'extérieur du récipient en verre (300),

dans lequel la surface intérieure (309) et/ou la surface extérieure (310) ne présente pas de contrainte de compression chimique ; et/ou
dans lequel la surface intérieure (309) et/ou la surface extérieure (310) présentent une contrainte de compression de 10 MPa ou moins ; et/ou
dans lequel la surface intérieure (309) et/ou la surface extérieure (310) présentent une contrainte de compression de 0,01 MPa ou plus.

6. Récipient en verre (300) selon l'une quelconque des revendications précédentes, dans lequel le récipient en verre (300) est rempli d'une composition, de préférence une composition pharmaceutique, comprenant de préférence une substance active pharmaceutique.

7. Récipient en verre (300) selon l'une quelconque des revendications précédentes, dans lequel le récipient en verre (300) est fermé par un dispositif de fermeture, de préférence un bouchon ou un capuchon.

8. Pluralité de récipients en verre (300), chaque récipient en verre (300) comprenant, en tant que parties du récipient

i) une région supérieure (308) ;
ii) une région d'épaulement (307) ;
iii) une région de corps (301) avec une première extrémité (302) et une deuxième extrémité (303), dans laquelle la deuxième extrémité (303) de l' e est adjacente à la région d'épaulement (307), dans laquelle la région de corps (301) présente un diamètre extérieur $d_1$ et une épaisseur de verre $s_1$, la région de corps (301) étant **caractérisée**

**par** un axe longitudinal $L_{tube}$ qui passe par le centre des première et deuxième extrémités (302, 303) ;

iv) un fond circulaire en verre (304), dans lequel le fond circulaire en verre (304) ferme la région de corps (301) au niveau de la première extrémité (302) ;

v) un talon en verre incurvé (305) s'étendant d'une extrémité extérieure (306) du fond circulaire en verre (304) jusqu'à la première extrémité (302) de la partie corps (301) ;

dans lequel, lorsque le récipient en verre (300) repose sur une surface d'appui, le fond circulaire en verre (304) étant en contact avec ladite surface d'appui, $h_2$ est la distance entre la surface d'appui et la deuxième extrémité (303) de la partie formant corps (301) ;

dans lequel la condition suivante est remplie :

$$(A \times X) / B = C$$

dans laquelle

- **A** est la médiane de la charge axiale en N de la pluralité de récipients en verre, nécessaire pour briser chaque récipient en verre afin d'obtenir des fragments,
- **X** est la surface normalisée en $cm^2$ définie comme

$$h_2 \times d_1 \times \pi + d_1^2/4 \times \pi,$$

- **B** est la valeur médiane du nombre de fragments de la pluralité de récipients en verre, chaque fragment ayant une surface de fragment de $0,3\ mm^2$ ou plus et de $1,0\ mm^2$ ou moins, et
- **C** est le taux de fracture ;

où **A** est compris entre 2 500 N et 6 000 N ;

où **B** est compris entre 150 et 1 000 ;

dans lequel la pluralité de récipients en verre (300) comprend au moins 100 récipients en verre (300),

dans laquelle, pour au moins 50 % des récipients en verre (300) contenus dans la pluralité de récipients en verre (300), le rapport de rupture C est de 120 $N \times cm^2$ ou plus ;

dans lequel le récipient en verre (200) peut être obtenu par un procédé de fabrication d'un récipient en verre à partir d'un tube en verre (201) ayant un diamètre extérieur $d_1$ et une épaisseur de paroi $s_1$ dans une machine de traitement du verre (100),

dans lequel le tube en verre (201) comprend une première partie (202) avec une première extrémité (203), une deuxième partie (204) avec une deuxième extrémité (205) et un axe longitudinal $L_{tube}$ qui passe par le centre des première et deuxième extrémités (203, 205),

dans laquelle la machine de traitement du verre (100) comprend une pluralité de stations de traitement (101, 101a, 101b, 101c), des premier et deuxième mandrins de serrage (206, 207) qui sont adaptés et agencés pour maintenir le tube de verre (201) tout en faisant tourner le tube de verre (201) autour de son axe longitudinal $L_{tube}$ et pour transporter le tube de verre en rotation (201) d'une station de traitement de récipients en verre à la suivante, un dispositif de chauffage (208) et une matrice de moulage (209) ;

dans lequel le procédé comprend les étapes consistant à

I) chauffer le tube en verre (201) à un emplacement défini entre la première partie (202) et la deuxième partie (204) à une température supérieure à la température de transition vitreuse du verre, tandis que le tube en verre (201) tourne autour de son axe longitudinal $L_{tube}$ et écarter la première partie (202) et la deuxième partie (204), séparant ainsi la première partie (202) de la deuxième partie (204) et formant un fond fermé (210) à une extrémité de la première partie (202) ;

II) déplacer la matrice de moulage (209) vers le fond fermé (210) et mettre la matrice de moulage (209) en contact avec le fond fermé (210) ;

dans lequel, tout en amenant la matrice de moulage (209) en contact avec le fond fermé (210) lors de l'étape II), une distance $Y_m$ entre la matrice de moulage (209) et le premier mandrin de serrage (206) est réduite par paliers lors d'une première étape IIa) d'une distance $Y1_m$ et lors d'une deuxième étape IIb) d'une distance $Y2_m$, où $Y_m$ est la distance la plus courte entre l'extrémité supérieure du premier mandrin de serrage (206) et l'extrémité inférieure de la matrice de moule (209) et où $Y_m$ est mesurée dans une direction parallèle à l'axe longitudinal $L_{tube}$ ;

dans lequel il existe un délai $t\Delta\ t$ entre la première étape IIa) et la deuxième étape IIb) de l' , d'une durée de 1,5 seconde ou plus ;

dans lequel le rapport entre la distance réduite lors de la première étape IIa) et la distance réduite lors de la deuxième étape IIb) $Y^1_m\ /\ Y^2_m$ est d'au moins 30 ;

dans lequel le récipient en verre (300) est choisi parmi le groupe constitué de :

- un flacon de taille « 2R » selon la norme DIN EN ISO 8362-1:2016-06, dans lequel les conditions i) à iii) suivantes sont remplies :

i) $s_1$ est compris entre 0,9 et 1,15 mm ;
ii) $d_1$ est compris entre 15 et 17 mm ;
iii) $h_2$ est compris entre 21 et 23 mm ;

- un flacon portant la désignation de taille « 4R » selon la norme DIN EN ISO 8362-1:2016-06, dans lequel les conditions i) à iii) suivantes sont remplies :

i) $s_1$ est compris entre 0,9 et 1,15 mm ;
ii) $d_1$ est compris entre 15 et 17 mm ;
iii) $h_2$ est compris entre 31 et 33 mm ;

- un flacon portant la désignation de taille « 6R » selon la norme DIN EN ISO 8362-1:2016-06, dans lequel les conditions i) à iii) suivantes sont remplies :

i) $s_1$ est compris entre 0,9 et 1,15 mm ;
ii) $d_1$ est compris entre 21 et 23 mm ;
iii) $h_2$ est compris entre 25 et 27 mm ;

- un flacon portant la désignation de taille « 8R » selon la norme DIN EN ISO 8362-1:2016-06, dans lequel les conditions i) à iii) suivantes sont remplies :

i) $s_1$ est compris entre 0,9 et 1,15 mm ;
ii) $d_1$ est compris entre 21 et 23 mm ;
iii) $h_2$ est compris entre 30 et 32 mm ;

- un flacon portant la désignation de taille « 10R » selon la norme DIN EN ISO 8362-1:2016-06, dans lequel les conditions i) à iii) suivantes sont remplies :

i) $s_1$ est compris entre 0,9 et 1,15 mm ;
ii) $d_1$ est compris entre 23 et 25 mm ;
iii) $h_2$ est compris entre 29 et 31 mm ;

- un flacon portant la désignation de taille « 15R » selon la norme DIN EN ISO 8362-1:2016-06, , dans lequel les conditions i) à iii) suivantes sont remplies :

i) $s_1$ est compris entre 0,9 et 1,15 mm ;
ii) $d_1$ est compris entre 23 et 25 mm ;
iii) $h_2$ est compris entre 44 et 46 mm ;

- un flacon portant la désignation de taille « 20R » selon la norme DIN EN ISO 8362-1:2016-06, dans lequel les conditions i) à iii) suivantes sont remplies :

i) $s_1$ est compris entre 1,15 et 1,25 mm ;
ii) $d_1$ est compris entre 29 et 31 mm ;
iii) $h_2$ est compris entre 34 et 36 mm ;

- un flacon portant la désignation de taille « 25R » selon la norme DIN EN ISO 8362-1:2016-06, dans lequel les conditions i) à iii) suivantes sont remplies :

i) $s_1$ est compris entre 1,15 et 1,25 mm ;
ii) $d_1$ est compris entre 29 et 31 mm ;
iii) $h_2$ est compris entre 44 et 46 mm ;

- un flacon portant la désignation de taille « 30R » selon la norme DIN EN ISO 8362-1:2016-06, dans lequel les conditions i) à iii) suivantes sont remplies :

i) $s_1$ est compris entre 1,15 et 1,25 mm ;
ii) $d_1$ est compris entre 29 et 31 mm ;
iii) $h_2$ est compris entre 54 et 56 mm.

9. Procédé pour remplir un récipient en verre (300) dans une ligne de remplissage automatisée , le procédé comprenant les étapes suivantes :

I) fournir un récipient en verre (300) selon l'une quelconque des revendications 1 à 7 ou une pluralité de récipients en verre (300) selon la revendication 8 ;
II) le remplissage des récipients en verre (300) avec une composition, de préférence une composition pharmaceutique liquide, dans une ligne de remplissage automatisée ;

dans lequel la ligne de remplissage automatisée fonctionne avec une efficacité globale de l'équipement d'au moins 400 récipients en verre (300) par minute, cette valeur étant la valeur moyenne déterminée sur une durée de fonctionnement d'une heure.

10. Utilisation d'un récipient en verre (300) selon l'une quelconque des revendications 1 à 7 ou d'une pluralité de récipients en verre (300) selon la revendication 8 pour augmenter le taux de rendement global des lignes de remplissage automatisées.

# Fig. 1

## 100

101

102A

withdrawl

103

101a

102B

part B

part A

# Fig. 2

# Fig. 3

continuation Fig. 2C

# Fig. 4

A

B

# Fig. 5

<u>300</u>

# Fig. 6

## 300

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19622550 A1
- EP 3842024 A1
- US 2014151371 A1
- EP 3760597 A1

**Non-patent literature cited in the description**

- European Pharmacopoeia. 2011